# EUROPEAN PATENT SPECIFICATION

(11) **EP 1 110 402 B1**
(45) Date of publication and mention of the grant of the patent: **02.05.2003**
(21) Application number: 99948814.1
(22) Date of filing: 06.09.1999
(51) Int. Cl.: H04N 7/173, H04N 5/00, G06F 17/30

(54) **APPARATUS AND METHOD FOR EXECUTING INTERACTIVE TV APPLICATIONS ON SET TOP UNITS**
VORRICHTUNG UND VERFAHREN ZUR AUSFÜHRUNG VON INTERAKTIVEN FERNSEHANWENDUNGEN AUF SET TOP BOXEN
DISPOSITIF ET PROCEDE PERMETTANT D'EXECUTER DES APPLICATIONS TELEVISEES INTERACTIVES SUR DES COFFRETS D'ABONNES

(30) Priority: 04.09.1998 EP 98402187
(43) Date of publication of application: 27.06.2001
(73) Proprietor: THOMSON multimedia, 92100 Boulogne Billancourt (FR)
(72) Inventor: CHEVALLIER, Louis, F-92648 Boulogne Cedex (FR); HOUEIX, Pierre, F-92648 Boulogne Cedex (FR); DEHOUX, Olivier, F-92648 Boulogne Cedex (FR); LETELLIER, Philippe, F-92648 Boulogne Cedex (FR)
(74) Representative: Kohrs, Martin
(86) International application number: EP9906992
(87) International publication number: WO00014965

(56) References cited:
- EP-A- 0 813 147
- EP-A- 0 847 020
- WO-A-98/31116
- US-A- 5 673 401
- "OpenAuthor, Overview, Technical White Paper" RETRIEVED FROM INTERNET, July 1998 (1998-07), XP002126675 http://www.opentv.com/docs/openauthor_whit epaper.pdf
- THRIFT P ET AL: "JTV - Java-enabled Television" PROCEEDINGS OF THE SPIE, page 120 XP002090497
- MORNINGTON-WEST A: "MHEG-5 AND JAVA - THE BASIS FOR A COMMON EUROPEAN API?" EBU REVIEW- TECHNICAL, no. 275, 21 March 1998 (1998-03-21), pages 11-15, XP000767494

## Description

### Technical field of the invention

The invention relates to information communications within interactive multimedia systems and more particularly to an apparatus and a method for executing interactive TV applications on set top units.

### Background art

The exchanges of information according to an environment of interactive multimedia devices involve at least a broadcaster and a plurality of multimedia terminals linked to the broadcaster by a communication network.

The interest shown by the consumer market in this technical field is growing. However, two issues are critical for the success of the emerging Interactive TV business: high quality interactive applications and the availability of powerful tools for producing these applications.

The production tools should be usable by designers with no knowledge of the downloading and decoder constraints. They should be well suited to TV production, enable live show management and take into account broadcasting constraints.

The document WO98/31116 (DIVA SYSTEMS CORP) describes a method and apparatus for providing an interactive menu structure within an interactive information distribution system. The menu structure has each menu contained in downloadable applets which are sent upon request from the service provider equipment to the set top terminal for display.

The document OpenAuthor published by OpenTV concerns the creation of interactive applications. The applications is delivered in compact optimized compiled code that runs directly on the virtual machine of a television receiver.

The document US5,673,401 (ROBIN) describes an object-oriented system for generating and displaying control items that allow users of an interactive network to recognize and select control functions via a graphical user interface. The control items, which can be visible or audible, are associated with control objects. Control objects are arranged in a hierarchy, and can contain one or more child control objects.

The Interactive TV Application (ITVA) designers have to take into account the fact that the needs of consumers are different from the needs of computer station users. Another point is that, due to distinctive features of the TV network, the audio-video media has to be integrated into the approach. Finally, the Interactive decoder's specific constraints and features such as the limited memory, the CPU, the display and the IR remote control have consequences on both the design of ITVA and the underlying execution process.

The OpenTV Operating System, available from OpenTV, Inc. Mountainview CA, which provides OS support, graphic layer and network access functions on decoders is well suited to interactive decoders since a great effort has been put on resource conservation and availability to the user. It also provides basic and efficient functions which prevent the application from being hardware dependent regarding the graphic, the network and the CPU. OpenTV supports the loading and execution of ITVA in the form of program and data. But the ITVA developer has to develop his own applications using a development kit in a C language even though authoring tools may make this easier in the future.

Another inadequacy regarding the portability issue, is that the translation of an application written in C into another system is a tedious process. The reason is that the structure of the application is buried within the code.

Furthermore, the addition of any feature into an existing application or the modification of the presentation style requires rewriting par of the code and regeneration ofthe application.

And finally, a general feature, like the management of the memory for an application, has to be implemented in each and every application. OpenTV does provide basic mechanisms for that, but the developer still has to program the management. This management may be part of a library, but a runtime engine has to handle it. It is to be noted that the interpreter is mono-thread which means that only one application can run at a time.

The tools that are available on personal computers are generally powerful and easy-to-use. The way they handle real-time audio-video material does not fit well with the broadcasting environment since the material is treated as particular hypermedia objects. Little attention is given to memory conservation and to network management. The associated editors are WYSIWYG and intuitive. This translates to a look-and-feel tightly bound with the navigation structure of the application.

MHEG5 (ISO/IEC Multi- and Hyper-Media Coding Expert Group), which owes its existence to the increasing convergence of broadcast and interactive technologies, is a model derived from MHEG1. The latter has proven to be quite complicated whereas MHEG5 is a format which enables the description of interactive applications in terms of combinations of interactive hypermedia objects. MHEG-5 represents an application as a set of objects called 'scenes' containing other objects.. Typical objects handled by MHEG5 and included in scenes are buttons, video, sounds etc. MHEG5 addresses the problems of transferring the application to a terminal by defining a coding scheme based on ASN1 (Abstract Syntax Notation 1). An interpreter running on the terminal (or decoder) loads the scenes and presents them.

A very simple reactive behavior can also be specified (e.g. when a button is pressed, start a video). This feature is based on a set of elementary actions applicable to the objects. In order to get a more specific behavior, one has to rely on MHEG3 which defines how external applications can be linked to the MHEG5 interpreter.

However, in this approach, the designer has to cope with the list of MHEG5 objects. No other object can be created and the problem of linking a MHEG5 application with specific code may be tricky.

HTML (HyperText Markup Language) is a format that has been created for transferring hypertext documents over the Internet. HTML has been upgraded to include images and new objects like sound or video, but it does not support real Interactive Application. The HTML pages contain text and other hypermedia objects and navigation link may exist between these objects and other pages.

Java has been plugged into HTML in order to add the capability to transfer programs along with HTML documents. It comes with a graphic and communication library. In this system, interactive application representation is supported both by HTML and Java data structure which may lead to a certain degree of inconsistency. Furthermore, for the moment, Java can be implemented only in the Internet network.

The resources likely to be available on the decoders dedicated to the Interactivity TV will be rather small in the near future. This problem may get even worse if the interactive applications need to share their resources with other applications like the Electronic Program Guide (EPG), and the Conditional Access system.

With the release of successive units, with the power increase, the decoders suitable to load an ITVA in a country may display different capabilities. OpenTV ensures the independence from the CPU. But other functions may evolve, such as the input management or the available graphics resolution. The same ITVA has to run on every decoder.

Another problem of controlling the decoder has to be taken into account. Indeed, the current decoder is controlled by an Infra Red remote comprising few keys. For instance, the user may have to perform navigation with the 4 arrow keypads.

### Summary of the invention

The Navigation Engine (NE) to be used within the decoders or the set top units addresses the problem of handling navigation oriented Interactive TV Application on the decoders. It aims to solve the above mentioned points by representing the ITVA in a specific format called the 'Interactive Application Description' (IAD), which leads to a breakdown of the Interactive Application Description according to its navigation structure. This breaking down includes the audio-video material.

It is a main object of the present invention to provide a tool for executing interactive TV applications on heterogeneous set-top units.

It is another object of the invention to represent the Interactive TV Application using a high level format such as the Interactive Application Description. This abstraction level will make it easier to port and share the ITVA between different decoder types and hence various Applications Providers.

It is a further object of the invention to convey the ITVA to the decoder using this IAD discipline. In this way, the Navigation Engine takes advantage of this high level representation through its memory management strategy and through the navigation support it can provide.

The present model separates the navigation structure of the application called the Interactive Application Description, from the way it will be rendered on the display. This is provided by Metaphor Elements (ME). In fact, the MEs not only take care of the screen management but also manage the user input and thus determine the look and feel of the application.

According to the present invention, the Navigation Engine which runs on decoders is to perform three main functions:
- Loading the Interactive TV Application on decoders;
- Associating the Interactive Application Description elements with particular Metaphor Elements; and
- Making them operate together.

The method for executing a plurality of interactive multimedia applications transmitted from an interactive multimedia applications source to a processing means comprises the steps of:
(a) loading the plurality of interactive multimedia applications into the processing means wherein the plurality of interactive multimedia applications are based on a plurality of nodes for data representation and a plurality of links binding the nodes for dynamic representation;
(b) creating interactive graphical representation having a hierarchical structure composed of interactive elements so that the interactive elements represent an interface between the nodes and a user;
(c) mapping the interactive graphical representation to the interactive elements so as to enable the user to interact with the interactive multimedia applications by associating each node to each interactive elements; and
(d) executing the plurality of interactive multimedia applications in the processing means in response to user's commands.

The corresponding apparatus comprises:
- means for loading the plurality of interactive multimedia applications into the processing means wherein the plurality of interactive multimedia applications are based on a plurality of nodes for data representation and a plurality of links binding the nodes for dynamic representation;
- means for creating interactive graphical representation having a hierarchical structure composed of interactive elements so that the interactive elements represent an interface between the nodes and a user; and
- means for mapping interactive graphical representation to the plurality of interactive multimedia applications so as to associate each the nodes to each interactive elements.

According the present invention, an associated method for managing the plurality of interactive multimedia applications comprises the steps of:
(a) selecting sets of nodes that are the last recently used;
(b) discarding gradually from the local data storage among the selected sets of nodes, the ones that are at the bottom of the hierarchy;
(c) loading required set of nodes in the processing means in response to user's commands.

Conversely, an associated apparatus for managing the interactive multimedia applications comprises:
- means for selecting sets of nodes that are the last recently used;
- means for discarding gradually from the local data storage among the selected sets of nodes, the ones that are at the bottom of the hierarchy; and
- means for loading useful set of nodes in the processing means in response to user's commands.

By implementing the system according to the present invention, the following advantages can be obtained:
- Since there is a clear and well defined interface between the Interactive Application Description and the Metaphor Elements, a library of MEs can be stored (romed) in the decoder, which saves bandwidth and RAM. Thus, these Metaphor Elements may be customized for a particular decoder;
- Furthermore, the 'look and feel' of the application can be changed dynamically by loading a new set of Metaphor Elements;
- The Navigation Engine can select which type of Metaphor Elements should be used on each particular decoder depending on the hardware and software requirements of these MEs. This makes it possible to have an application running on heterogeneous decoders;
- The Navigation Engine handles the deep structure of the application. In this way, it is in a position to provide navigation help and generic mechanisms much like the features available on the Web browser such as marks and backtrack management;
- The Navigation Engine is able to provide intelligent memory management owing to the IAD structure. Besides, the Interactive Application Description may be managed using virtual memory management, where the broadcast bitstream serves as virtual memory;
- The dynamic behavior of the IAD using Links may be obtained through local execution of pieces of code associated with the application;
- The Navigation Engine is able to know which part (i.e. which sets of nodes) of the Interactive Application Description is necessary at a given time based on the pages the user is looking at. Thus, it may decide to defer the creation of Metaphor Elements or destroy others to make room for a new one.

### Brief description of the drawings

Figure 1 represents an environment of the present invention with the different sources for an Interactive Application Description. Figure 2 represents inside components of a set top unit. Figure 3 represents a structure of an Interactive Application Description. Figure 4 represents a model of a hierarchy within a Navigation Engine. Figure 5 shows a data transmission between the Navigation Engine Modules, the Actors and the Navigation Engine.

Figure 6 is a graph of an Interactive Application corresponding to the Interactive Application Description given in Annex 2.

Moreover, this description comprises three annexes:
Annex 1 is an example of an Interactive Application Description.
Annex 2 is an example of an actor's code.

### Detailed description of the invention

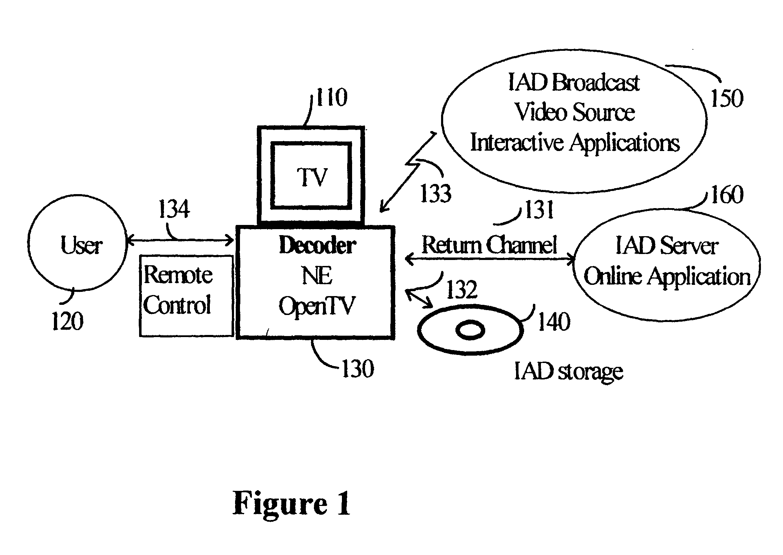

Referring to figure 1, the Navigation Engine (NE) is a piece of software running on set top units or decoders (130) in which the OpenTV Operating System is preferably implemented. The NE loads and runs Interactive TV Applications received from an interactive application emitter (150). The Interactive TV applications are described in a specific format called Interactive Application Description, or IAD. The decoder (130) is connected to a TV set (110) and communicates with a user (120) through a remote control (134).

According to the present invention, an engine type approach is used wherein the IAD structure involves high level objects that are parts of the applications. The NE defines a list of basic interactive elements called actors that are associated with these objects.

The IAD is transmitted to the decoder through a protocol that is based on NEMessages. These NEMessages may be transported by various low level transport protocols. The IAD format and NEMessages allow to alter the running applications. This provides a support for live event management.

The IAD also makes provision for audio/video management. For this purpose, the IAD and the code of the actors are downloaded on the decoder along with the audio/video material. The IAD and the actors can also be loaded by the decoder over a bi-directional return channel (131) from an IAD Server with an on-line application (160) or retrieved from a storage device (140), such as a CD-ROM, DVD, Hard Disk or static memory.

Once a part of an IAD is loaded, it is called a Local Navigation Graph, or 'LNG'. An LNG is a set of nodes creating a minimum interactive application which is for instance an interactive page. This page enables the TV spectator to access other pages; the set of all these pages or objects making up the interactive application.

The model according to the present invention separates the navigation structure of the application from the way it will be displayed on the screen owing to Metaphor Elements (MEs). In fact, the MEs, which are particular actors, not only take care of the display management but also manage the user input, that is to say the look and feel.

The representation of the ITVA using a high level format such as the IAD will make it easier to port and share the ITVA between different tools and hence various Applications Providers. Thus, ITVAs are conveyed down to the decoder using this IAD discipline. Henceforth, the NE itself takes advantage of this high level representation through its memory management strategy and through the navigation support it can provide.

Some MEs designed for that purpose may be grouped together to form a Metaphor. This idea has proven to be required to build successful Man Machine Interfaces (MMI). The present system supports the use of libraries of Metaphor Elements. This leads to the design of reusable libraries containing high quality MEs well suited to the consumer market. Furthermore, the choice of the ME for a particular ITVA is (partly) left to the NE. It may take into account the decoder resources available, the consumer profile, or the country where it is running to choose the right ME for a given ITVA.

As previously mentioned, the Navigation Engine according to the present invention is based on a high level description of the Interactive Application Description. The involved data structure describes the deep structure of the applications in such a way that the actual presentation of the applications is handled by Metaphor Elements.

The Navigation Engine runs continuously on decoders. When an IAD reaches the decoder via the broadcast stream (133) or the end-to-end network (131), the NE loads this IAD, creates the interactive objects and provides means for having them work together.

Thus, according to the present invention, the Navigation Engine which is built on top of OpenTV performs the main following actions:
- Load the application in the form of an IAD;
- Create and apply Metaphor Elements to the IAD;
- Activate and notify Links and Metaphor Elements; and
- Manage the Navigation through the IAD.

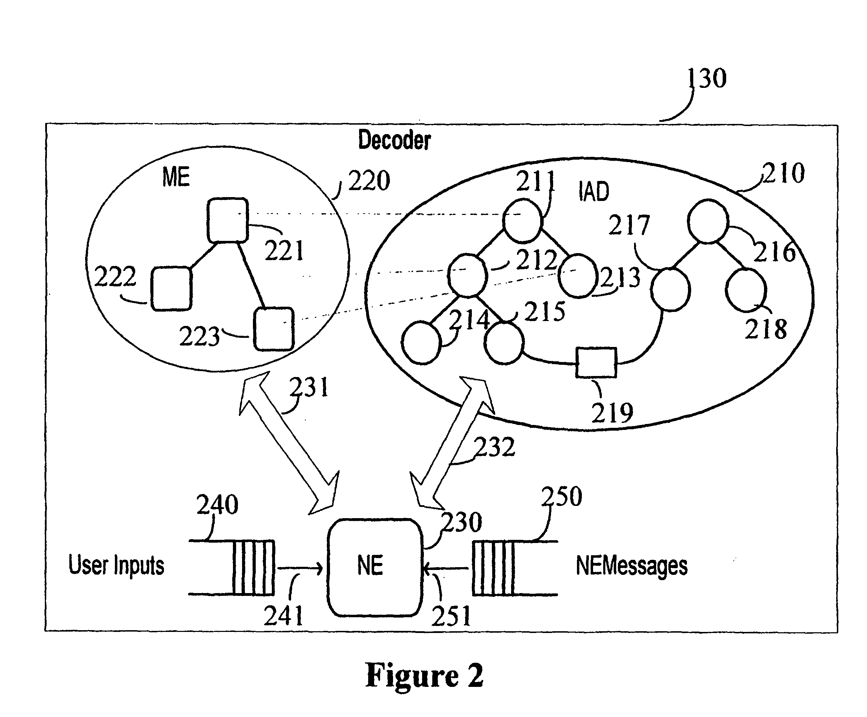

Figure 2 describes the architecture of the Navigation Engine wherein the IAD is transmitted (251) to the NE (230) within the decoder through a protocol using 'NEMessages' (250). Conversely, the user inputs (240) are transmitted (241) to the NE.

The NE is an interactive program whose detailed tasks are:
- to get lADs from various channels (i.e. the broadcast channels, return path). Once an IAD has been loaded, the nodes in the graph are associated with interactive elements, the actors. Special (but very commonly used) actors have a graphical representation. They are called the *metaphor elements* (ME). The process of associating an actor with a node of the LNG is called the *mapping* of the node;
- to get messages from the broadcast channel (133) or by other means to update the current LNG;
- to react to the user inputs (240). This may involve catching parts of the IAD that are not yet in the decoder, mapping or unmapping already loaded nodes, etc.
- to manage the communication between actors.

The NE separates, as is represented by arrows (231,232), the navigation structure of the application represented by the IAD (210) from the Metaphor elements (220) the composition of which will be described later on. It should be able to cope with any network for loading the Interactive Application Description and the Metaphor Elements including the end-to-end network.

During the operation of the NE, two kinds of messages may appear:
- The *NEMessages* (250) are OpenTV messages that indicate system events like user input (240), OpenTV module arrival and any other asynchronous event.
- The *NEEvents* are internal to the NE. They are used to exchange information between the actors and the NE in an asynchronous way. This information includes navigation or mapping requests.

The IAD structure is based on the Nodes and the Links. The Nodes and the Links respectively provide data representation and dynamic representation.

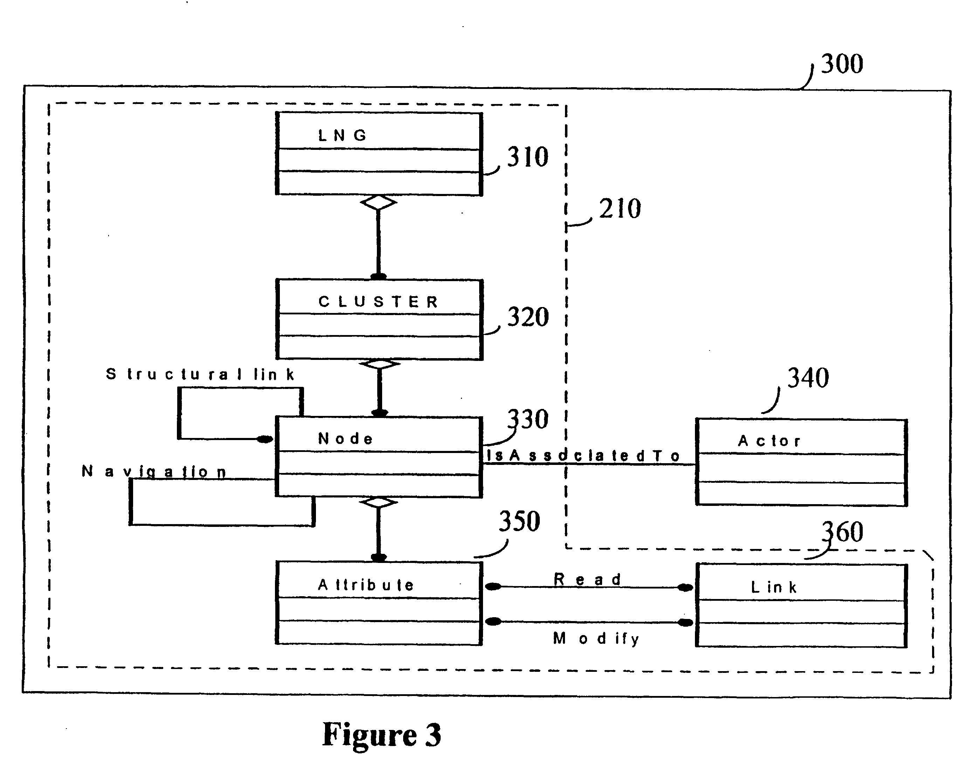

Figure 3 uses the object modeling technique known as OMT (Object Modeling Technique), which is an object-oriented methodology dedicated to the description of software systems. It describes the structure of the IAD (210) wherein to each LNG (310) corresponds a running application. Clusters (320) are composed of a plurality of nodes, one of which (330) is represented in this figure 3.

The nodes (330) are connected to each other by structural links. They own attributes (350) that characterize their specificity, e.g. the label of a button or the identification or title of an audio/video bitstream. The navigation link is dedicated to the representation of the navigation inside the IAD which may also be implemented by the link (360).

This structure is transmitted to the NE wherein the Nodes are associated with Actors (340) which handle the interface between the Nodes and the User. The structure that is built by the NE from the transmitted IAD is the Local Navigation Engine (LNG).

The Nodes are connected together to form a graph and they own a list of *attributes.* These attributes have a name and a value; the latter may change during the application execution. The nodes are connected together by 2 types of links: *structural* links and *navigation* links. Structural links are intended to support the organization in screens of the interactive applications or the structure related to system objects (video, return channel). The navigation links serve the purpose of navigation between nodes.

As is shown in Figure 3, *Clusters* are sets of Nodes connected by structural links. The clusters provide the unit of memory management for the NE: all the nodes in a cluster are loaded and unloaded together. The clusters should not be too large in order to fit into the available decoder memory.

Structural links exist only within the clusters; they must not form loops. Navigation links occur within and between the clusters. They can form arbitrary graphs. The navigation links may be activated by the Actors or by the Links. Upon the activation of these links, the NE should load and map the cluster to which they are pointing, if they point to a node which is not part of the current cluster.

As all the nodes in a cluster are loaded together, the clusters are used to represent indivisible parts of applications such as screens or portions of screens.

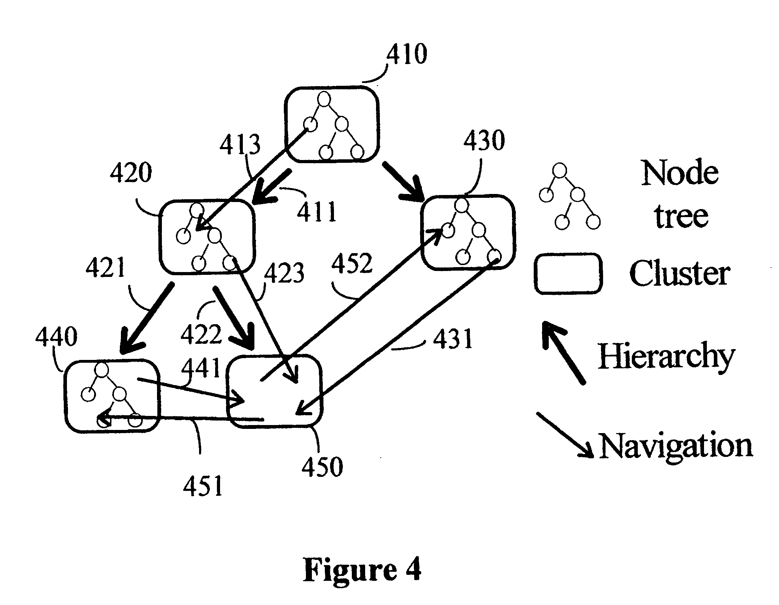

Figure 4 shows a representation of the clusters and their hierarchy within the Interactive application description of the Navigation Engine.

The clusters (410, 420, 430, 440, 450) of an interactive application form a tree. This tree defines a hierarchy among the clusters. This hierarchy is represented by thick arrows (411, 412, 421, 422). The NE ensures that, when a cluster is loaded, all the clusters on the path from the root of the tree to this cluster are also loaded. Thus, objects common to two clusters (actors, variables) should be located in the cluster which is over these two clusters. The top cluster (410) of an application groups the parts of the application that are common to the whole application.

The Navigation links between clusters, which are represented by simple arrows (413, 423, 431, 441, 451, 452), define the possibilities of moving within the IAD. These movements can occur from one cluster to another one. They may need the mapping of additional actors or the loading of missing parts of the LNG. The NE will automatically manage the memory by discarding useless parts of the LNG or deleting some useless actors.

The values of the attributes can be represented by terms which are data structures. These terms are for instance an integer, a string of characters, a floating point number, a Boolean etc... or a list of the previous types or list of lists.

An Application Programmable Interface (API) enables to create, read and modify terms. A coding scheme enables to store and to retrieve terms from memory.

When loading and processing the messages describing the IAD, the NE decodes also the term values. Since these values may represent relatively large data structures (e.g. text), it is not desirable to move or copy this data from one memory location to another in the decoder, but rather to share the data representation as much as possible. In particular some actors, like actors presenting texts, should avoid to copy the value of the term. This is possible when the attribute in question is supposed to have a constant value.

### The Interactive Application Description

The IAD is the central data structure of the Navigation Engine. Its purpose is to represent the interactive applications. This piece of data is downloaded by the decoder and parsed and loaded by the Navigation Engine. It may be broadcast or transmitted by any other means.

The IAD is data (object)-oriented rather than program oriented because the chance of finding many data items with the same pattern or common generator is low in an interactive application compared to series of data like prime numbers or a file containing records which imply underlying common software. The typical Interactive Application would, on the contrary, contain data with no similarity between them.

The IAD is made of *Nodes* (211, 212, 213,..., 218) as shown by figure 2. The nodes are linked together forming a graph-like structure. The nodes own a set of *attributes* which bear a name and carry data of any kind (text, number), as indicated in the previous section. When loaded by the NE, the nodes are associated to interactive elements which provide the actual 'look and feel'.

An IAD contains also small programs which link the nodes together in order to define dynamic relationships between them. These navigational links define the lAD's dynamic behavior. Navigational links are able to change the value of some attribute whenever a given condition is met. This condition is computed from other attributes.

Henceforth, the IAD models the way an ITVA is downloaded into the decoder. The structure of the IAD allows to load the application part by part. The loading of the IAD in the memory by the NE involves the loading of 3 types of data:
- The IAD with its Node structure, Link code and data;
- The actors description and code (when the actors are not already resident in the decoder memory); and
- Specific data required for the actors that cannot be included directly in the IAD.

### Nodes, Links, Clusters

The IAD is transmitted through 3 types of NEMessages:
- Creation messages. These messages give the structure of the nodes (sub-nodes, attributes) and the description of the links. A creation message corresponds to a whole cluster;
- Modification messages and destruction messages; and
- Code of the links.

Each node or link owns a unique ID that constitutes a global name used by subsequent modification or destruction messages. Conversely, clusters are also given an ID for memory management purposes.

### Actor type description

New types of actors may be downloaded into the decoders. A type of actor is described by its code and some information that will enable the NE to select this actor for associating it with a given node.

The code is dynamically linked with the NE. Since this code may be developed independently, it must follow a defined API. OpenTV provides a mechanism enabling this loading.

The list of functions corresponds to a Creation of a new instance, Destruction of the instance, Preparation, Notification of an event to the actor's instance, a Timer notification or a Test of compliance with the decoder.

The information associated with the type of actor is:
- The name of the type of actor and
- The type of actor it subsumes, which enables a same IAD node to be represented by different types of actors on different decoders.

### Data loading

This mechanism of data loading makes it possible to provide Actors with data coming from the bitstream or from the return path, this data being not directly transmitted in the IAD structure. This makes it possible not to load the data or to postpone the loading of the data until it is needed. The broadcaster may decide to insert this data knowing which type of Actors he is sending along with the LNG.

These pieces of data are different from the LNG since they may be specific to a particular set of Actors. These pieces of data are called *NEModules.* They can even be stored in the ROM. The NEModules are pieces of data of any length whose structure is only known by the recipient. The NE sees these data as a sequence of bytes. In an example to be given later, such data may for example represent a particular bitmap picture associated with the actor.

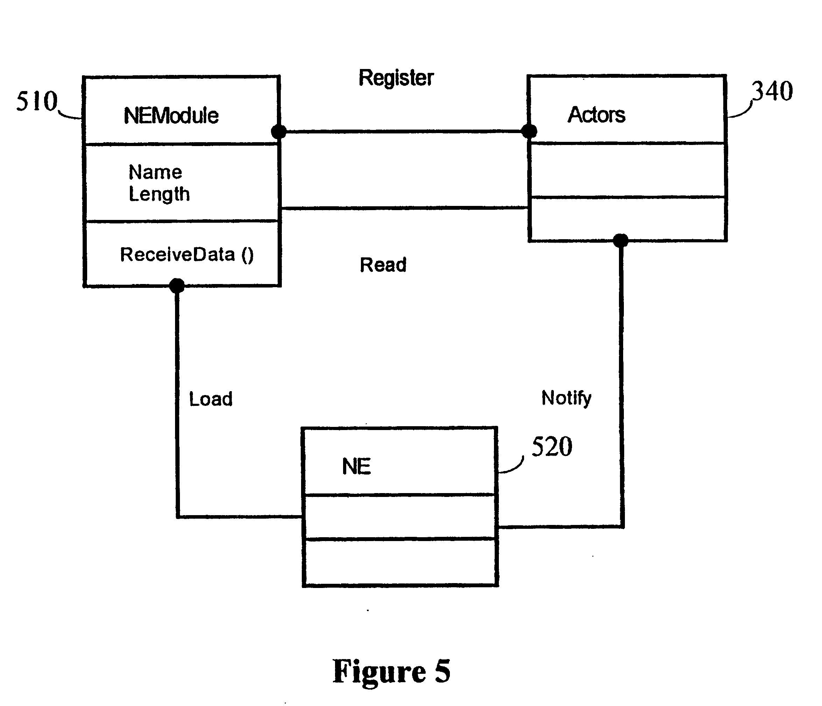

Figure 5 represents the different operations of the NEModules that occur in the Navigation Engine (520) wherein each NEModule (510) has a NAME, a LENGTH and contains a buffer of LENGTH bytes.

The NEModule (510) API provides means for:
- Registering (512) an actor (340) that wants to be notified (518) when the next NEModule of a given name arrives.
   The registration is valid until the actor is deleted or until the actor cancels it for NEModules of this name, which means that an actor will be repeatedly notified each time a NEModule of the given name reaches the decoder. The registration may fail for internal reason: memory exhaustion or invalid name, for example. Two actors (340) may register (512) for the same name.
- Canceling the registration can be done by an actor. If two actors register for a same name and one of them cancels its registration, the other remains registered since the registration is handled independently actor by actor.
- Reading (514) a buffer after a notification (518) so that an actor may read the buffer associated with the NEModule just arrived. If a new NEModule of the same name arrives in the mean time, the actor will read the last NEModule content.

Regarding the notification (518), the NE does its best, according to the resources it has. Some NEModules may be lost if too many NEModules arrive in a short time.

The structure of the data contained in an NEModule is not specified; it may be structured like Terms, in which case the Term management API is available.

### Links

The Links enable to specify the dynamic behavior of an IAD independently from the actors. They work on the attributes of the nodes and they consist in a piece of code that can perform test and affectation of values on attributes. The Links are made of a trigger expression and an action function. The trigger expression is a function of a number of attributes; The value of the expression is checked by the NE each time one of the relevant attributes is modified. When the expression evaluates to a true status, the action is executed.

Standard control structures are available for coding the action along with standard operators. The values handled by the Links are the Terms. The expressions are built using constant and variable attributes.

Primitive actions available in actions are as follows:
- affect a new value to an attribute.
- wait <delay> - and
   at <date> do (Suspends the execution of the link by the specified delay).
- exit - (Exits from an application).
- navigate <node> - (Navigate towards a Node, specified by its ID).
- backward, forward, next, previous, up, down - (Calls the navigation function offered by the NE)

A link is associated with a cluster. It may access any attributes of any Node in the cluster itself, or the nodes of the clusters above it up to the top-level clusters.

### The Metaphor Elements

The Metaphor Elements (ME) handle the graphical presentation of the IAD. In order to be displayed on the screen and to offer a chance to the user to interact with it, a node must be *mapped,* i.e. associated with a particular ME. The NE is in charge of performing this association.

The Metaphor Elements are managed in an object oriented manner. A set of *classes* of Metaphor Elements are managed by the NE. New classes may be added dynamically. These classes of Metaphor Elements describe the capabilities of the ME. The NE uses this data structure when choosing an ME for mapping a piece of IAD.

The MEs are based on OpenTV gadgets. The code of the ME (graphical functions) are coded using the OpenTV o-code interpreter. The Metaphor Elements can be downloaded along with the IAD, but they can also be stored in a read-only memory of the decoder.

A set of basic MEs is defined. These MEs should make it possible to carry out most of the interactive applications. These basic MEs include screen, button, label, text. Their specification does not involve the look and feel but concentrates only on fundamental functions. This enables to develop various sets of MEs with sophisticated graphical features which retain the compliance with the basic set and hence are still usable with the original interactive application.

### Actor class management

An equivalency scheme is defined between the actors: this scheme enables a same Interactive Application to be presented on each decoder with the best possible result with a different look and feel. On a decoder, the MEs are selected depending on the capabilities of the decoder. Typically, the selection criteria could include, but are not limited to, on-screen resolution, number of displayable colours and decoder processing power and memory, country information and specific broadcaster wishes as to the on-screen appearance of the application he manages. The criteria values are transmitted with each set of MEs.

An ME set contains the code of the actors of the set and a function which tests whether the contained actors can run on the decoder, based on the criteria above, so that the NE is able to select the actor set appropriate for the particular decoder. Each actor belongs to a class, defined by the actor's function. As an example, a toggle switch defines a class of actors. When the NE needs to map a node which indicates that it has to be associated with a toggle switch, the NE selects an appropriate available actor of the toggle switch class.

The code associated with each ME class complies with a well-defined API. This code is supposed to be downloaded into the decoder at run time and dynamically linked.

At a given time, an actor is assciated with one node (the node is said to be mapped).

Actors and MEs share some fundamental functions:
- Creation / Destruction;
- Preparation;
- Association / Dissociation with, respectively from a node. This makes it possible to attach an actor to many nodes successively;
- Activation / Deactivation - An actor is visible or not depending on its activation status;
- Notification. An actor is notified whenever one of the attributes it is interested in gets a new value or when the node structure changes. A notification is also associated with a timer expiration or when data arrive;

### Metaphor Elements Management

As already mentioned, Metaphor Elements are a special kind of actor dedicated to graphical user interfaces. These actors may involve a tight cooperation between them, thus a specific management needs to be designed. When a Pane (e.g. a window) manages sub-Actors (e.g; buttons), the problem is to have these sub-actors displayed as smoothly as possible. In the case of a Pane managing a set of buttons, the sequence of events is as follows:
1. The Pane is created
2. The Button is created
3. The Pane determines the actual position of the Button
4. The Pane is drawn with its sub-actor

The button is displayed only when its final position has been set.

### Implementation

The actor implementation relies on the OpenTV UIMS gadgets (user interface management system) so as to take advantage of the graphical objects management.

In order to handle the MEs, an API is defined. This API contains different functions that are related to geometry. Since the MEs are based on gadgets, they must be compliant with the OpenTV UIMS policy, especially regarding the processing of some messages (NEW, ACTIVATE, FOCUSED,...).

In particular, the NE expects that the MEs will handle the DELETE and ACTIVATE messages. Besides, the NE adds the following messages:
- PREPARE
- TIMER
- NAVIGATE

In order to follow the policy of OpenTV, the Actors are notified through the same message handling function such as:
- Creation
- Destruction
- Activation
- Focus
- Preparation
- Configuration
- Notification (timer, attribute, navigation)

### Basic Metaphor Elements

A set of basic MEs is defined so as to represent the minimum set of MEs that composes a metaphor. They have a fundamental behavior that may be altered by some attributes. Custom metaphors may override the basic MEs in order to provide more sophisticated look and feel. The basic MEs use attributes in order to determine their look and feel and their graphical parameters. There are common attributes and specific attributes.

A set of ME could be stored in the ROM of the decoder with the common attributes that are as follows:

### Common attributes

Some attributes are shared by all the MEs and theirs effects are the same:
- Map (Boolean): Is the ME to be displayed or not
- X, Y (integers): Indicates the position of the ME in the Screen
- Width, Height (integers): may be read-only: the actor may or may not take them into account
- Font (integer): for displaying the text, an index in the font table
- Sensibility (Boolean): whether the ME accepts the user inputs
- Foreground index in the colormap
- Background index in the colormap
- Border
- Picture is in bitmap OpenTV standard
- Activation should be triggered on Enter key press.
   The composite actors get the key events not consumed by their sub-actor.
- FocusCirculation describes how the focus should be passed among the actors
- Shortcut gives the list of keys the actor wants to enable as shortcuts for its activation

Many attributes can have their values either directly stored in the associated term or stored in a NEModule whose name is given in the term.

### The following is a list of possible actors:

### Audio

The audio actor manages audio streams which may come from a network such as the broadcast or return channel, or they may be stored in the memory. The frame is the basic time unit.

### Video

This video actor manages video streams which may come from a network such as the broadcast or return channel, or they may be stored in the memory.

### Background images

This background images actor displays an image in the background.

### Button

The button actor is an interactive element that enables the user to trigger an action.It may display a text, an icon or an outline.

### Label

This label actor displays a one-line text or a picture. It is not selectable and it may display an icon.

### Picture

The picture actor displays a picture which is supposed to be bigger than the icon associated with the button or label. Since it may take time to load the pictures, the Picture actors could provide for progressive loading that can be interrupted if needed.

### Drawing

The drawing actor displays drawings which are displayed based on the reference point defined by (X, Y). The drawing is described with a proprietary format. It may be produced by translation from CAD tools files.

### Animation

The Animation Metaphor Element displays a graphical animation.

### Entry field

An entry field enables the user to enter a value. This value may be numeric or alphanumeric. The value should be displayed on one line. The entry field could make use of any trick for making it possible to enter arbitrary text from the numeric keypad of standard remote control.

### Toggle

A toggle actor enables the user to enter a Boolean value.

### Text

The text actor displays a read-only text.. It may be multi-line (a line is ended by '\n').

### Pane

The pane actor manages the MEs attached to the sub-nodes of the pane's associated node. It is a composite ME. The Pane ME can arrange its sub-MEs in row or column.

### Menu

The menu actor is a Pane which has the behavior of a menu. It assumes that its associated node is the root of a tree that represents the menu tree. This tree should contain subMenu and Buttons. The tree may be displayed with pull-down menus or any other mechanism.

### List

The list actor is a composite actor that enables the selection of elements. It assumes that its associated node has a sub node which will be associated with the Button actor. The Button actor will be activated by the List actor.

### Container

The container actor merely manages sub actors that have a common behavior. It applies a default behavior to its sub-actors. One example of such a default behaviour is the propagation of activation or deactivation of the container actor to all of its sub-actors.

A container is useful for managing the sub-trees of a node that are stored in different clusters.

The attributes are:
- Exclusive If present, only one of the node's children will be active at a time. If one of them is activated (by navigation), the others are deactivated.
- Activation The Container gets a key event not consumed by its sub-actor. The Activation attribute could be triggered by pressing the Enter key of a remote control.

### Top level actors

There are 2 top level actors: the screen and the sheet. The top-level actors are used by the NE to manage the navigation. The node linked to a top-level actor is typically the root node of a cluster. A function associated with these actors indicates if it is mapped.

A Screen is a top-level ME. That means that all its sub-MEs will be displayed at the same time (depending on their mapping status, i.e. they are displayed if they are mapped). A Screen may involve video and audio. The video is then displayed in the background. Still images can also be contained in these actors. The screen is aware of the fact it manages MEs; hence, it practices the ME API. Only one Screen can be mapped at a given time, and only one screen may be active at a time.This means that when a new screen is navigated to (i.e. activated), the current one is discarded (i.e. inactivated).

A Sheet is similar to a Screen except that many sheets may be activated at a same time, in this case they share the screen space.

### High Level actors

High level actors can be defined for common mechanisms like:
- A help to the navigation. These actors make use of the navigation structure of the applications. They may rely on an intuitive graphical representation of graphs, trees or the current state of the stack.
- The VCR type user interface for browsing through a linear structure.

It should be kept in mind that in another embodiment, custom MEs can be defined for the purpose of an application with specific requirements.

### Navigation Engine operation

### Application

The notion of application is introduced to enable the NE to support many applications at the same time without mixing each application's private data, including the context of the application.

Presently, this context contains the color look-up table, the metaphor, the state and the navigation path.

There are 4 functions applicable to the applications. The NE can start and kill applications so that an application is started when the NE receives the ApplicationDescription message and it is killed when the ApplicationEnd message is received. In addition, an application can also be suspended and reactivated.

Each application is given a unique identification (ID). Every message carries the ID of the application to which it is related. Only one application is active at a time. In order to get user input, the application must be in the active state. When an application is suspended, all the related active top-level actors are deactivated.

The NE manages a list of applications. The memory management will give a priority to each active application.

### Timers

Some Actors may need to be notified at predetermined instants. The associated notification function is defined here along with the NE call that enables this notification. The notification is achieved by sending a special message. A dedicated function enables an actor to start a timer.

These timers may be used for animation purposes. The management of the timers is performed locally in each decoder. In OpenTV, the main loop must be modified each time a timer is added.

The Actor will be notified by means of a dedicated message (TIMER) and an actor may have many timers pending at the same time.

### Activation of Navigation Links, Handling of Navigation

When a Navigation Link is activated, the node at its end may not be present in the decoder's memory. The NE will detect this situation and it will load the cluster containing the node. This loading may take time: in a broadcast application, the module containing the cluster may be scheduled some time after; if the application is transmitted over the return channel, the data will take some time to get to the decoder.

When the cluster has arrived, the process of mapping the node in question takes place and the actor associated to the node is then notified. This notification indicates that the node has been "navigated to", and that the actor is activated.

The NE automatically tracks all the navigation events in order to enable backtracking.

Since many nodes may be displayed (or activated) at the same time, the navigation within the IAD involves managing many paths simultaneously. The NE handles and records all the paths.

Navigation links have a starting node and an ending node. When the navigation is performed, it is possible to discard the actor hierarchy containing the actor associated with the starting node. This is achieved through the call which leads to the deactivation of the corresponding actors.

### Local Navigation Graph Access

The LNG is a data structure handled by the NE. The LNG is an image of a portion of the IAD of an application. Since many applications may run on the IRD at the same time, many LNGs may be handled by the NE simultaneously.

The LNG may be partly in the memory of the IRD. The rest may be available on the bitstream (broadcast) or available on a remote server or stored on a media like a DVD.

The NE offers a set of functions giving access to the LNG from the Actors. This API hides the details of the internal management and particularly the memory management.

The NE and the actors run only as one thread. Therefore, it is not possible to rely on the suspension of an Actor (which would be implemented as a thread) for handling the loading of missing part of the LNG. Instead, the Actor can be forced to access only the part of the LNG that is in present in the decoder's the memory. This is achieved by setting up a discipline concerning the access of the LNG. An Actor may not access a part of the LNG without prior authorization by the NE.

Nevertheless, an Actor has a permanent access to the Node which it is associated with. In addition, an actor and its main Node may request access to a sub-node of its main Node.

The following API contains a set of public functions that are used by the NE and by the Actors.

### Actors' access to the LNG

The Actors access their associated Node through the 2 functions as_GetAttributeValue () and v_SetAttributeValue ().

Actors may access the LNG using any of the methods defined in the root classes: creation, deletion, various notification methods.

### Mapping the LNG

When a portion of the LNG is just created in the decoder memory, no Node is associated with an Actor. The NE will incrementally create Actors as they are needed. 'Creation of an actor', just as 'mapping' and 'association' means that a new instance of the object representing the actor is created.

The strategy is the following:
- At first, the NE maps the root Node of the cluster. The created Actor must be a top-level Actor or an actor that is linked to an actor associated with an cluster which is an ancestor of the current cluster. This actor, in turn, will trigger the creation of new actors that will be associated with the sub-nodes.
- The configuration/preparation phase takes place; this phase may involve negotiation between the actors. Some actors may also need loading data for their own configuration (icon representing the actor...).

The root cluster of an application is typically the starting point of the user interface of the application; it is automatically loaded and mapped by the NE.

The process of mapping the LNG is the way Actors are created and associated with the Nodes. The actual selection of an Actor in the Actor types database is dealt with in another paragraph of the description.

The mapping of the clusters is performed in the following steps:
1. Loading of the cluster that means loading all the nodes of the cluster.
2. Mapping of the root node of the clusters. This involves selecting the right type of actor and creating new actors.
3. Preparing the actor. This step may be done in the background. It enables the actors to load additional data (images) and to perform some configurations (screen configuration, pixel map decompression). This phase may involve negotiation between the actors.
4. The top-level actor is then activated; this results according to the present example in the display of the graphical hierarchical menu.

Actors possess an API with at least two functions: activate actor and deactivate actor.

Since the 3 first steps may take time, a wise application may trigger the loading and the mapping of some clusters some time before the display is actually needed.

The NE may decide itself to take this action. The clusters subject to be pre-loaded in this fashion are the clusters connected to the current cluster.

User navigation translates into movements in the LNG from the NE point of view which tracks the current nodes. These movements use the Navigation links. Specifically, user navigation is represented by triggering of Navigation links in the LNG.

Such events are implemented, in the NE, by dedicated NEEvents that are posted by Actors. When a navigation link is triggered, the NE maps the Node (in fact the whole cluster containing it) at the end of the link.

When mapping a Node, the NE may decide to unmap some Nodes, which means to delete some Actors. The mapping of a Node happens to require the mapping of other Nodes located in the descendant of this Node. The actors mapped on a node are responsible to ask the NE to map their sub-nodes.

A specific actor, whose type is "Root", is automatically mapped onto the Root Node by the NE. This actor merely searches for an attribute of name "Start" in this node; then it fires this attribute. Thus, the IAD writer has a chance to have some codes executed when the application starts. These codes must be put in a Link connected to the attribute Start.

The Root actor automatically descends the LNG from the Root node and asks the NE to map its immediate children. There is a function that enables the actors to map a node; this is handled by an NEEvent. The NE ensures that the clusters are loaded and mapped in a top-down manner with respect to the cluster tree.

This makes it possible for an actor to rely on the side effects that the mapping of the top cluster has occurred. For example, a top cluster may induce the creation of an actor that will load a new font in the decoder. This font will be available to the actors associated to the node contained in sub-clusters.

### Memory management

The memory management affects the LNG structures and the actors. Its purpose is to manage the components of the applications depending on:
- Which application is running,
- What part of the application is useful at a given time, this depends on which part of the LNG the user is browsing,
- What part the broadcaster wants to be available to the users.

The memory management concerns two types of objects, the clusters and the actors:
- LNG memory management is based on the clusters wherein the NE checks whether a cluster is required or not, i.e. whether some actors are linked to some nodes in this cluster,
- Actor management that is dedicated to manage actors.

The memory management is triggered when the NE requires memory to be freed. In such case, the NE decides what to take out of the memory. This selection is based on the clusters. It is possible to implement an algorithm for discarding the last recently used clusters.

In order to determine the usefulness of a cluster, the NE makes use of:
- The cluster's dependencies (a cluster cannot be discarded before its descendants),
- An actor's usefulness indicator which is managed by the NE.

The broadcast applications present a specific problem regarding:
- The users that have missed the beginning of a program and must have a complete user interface,
- The possible errors in the transmission since the broadcast channel is unidirectional,
- The possibility of using the bitstream as a virtual memory.

The scheme is the following. Considering that any application is made of clusters named Ci. At a given time, the LNG is made of a list of clusters.

These clusters should be broadcast in a cycled manner
C1 C2 C3 C4 C5 C1 C2 C3 C4 C5 C1 C2 C3 C4 C5...

Since the clusters are repeated, the NE is able to rebuild the whole application at any time, in a delay equal to the cycle length. This constitutes a description of the whole LNG on the bitstream, thus enabling the LNG to use it as a memory.

Some clusters may have to be modified in the course of the application. Modification messages may be inserted in between clusters: For instance, M2 carries a modification of cluster C2. 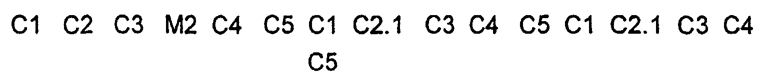 wherein C2.1 is a new version of C2.

If M2 is lost, the NE can load an updated version a short delay afterwards with the following clusters. If C2 was not loaded when M2 is processed, the NE does nothing, but the correct version of cluster C2 will be loaded when the NE loads it.

A possible use of OpenTV modules is to map each cluster to a module. The modification messages should be allocated to a specific module. At the beginning, the NE listens to every module it requires. Once loaded, the modules need not be reloaded since the modifications are carried by another module. On the contrary, the module carrying the modification messages is continuously loaded by the NE.

If an instance of this module is lost, the NE holds a wrong version of the cluster and it does not know that it should load the current (and correct) value of the cluster that has been modified. To cope with this problem the modification messages could regularly indicate the version number of each cluster. The NE compares this number with the one it holds and triggers a reload of the clusters when a new version is detected.

The scheme concerning static data like Link code, Actor code and description and data module is simpler: these codes need only to be sent cyclically.

The NE will learn that it needs to load these modules from the LNG.

### Input management, Translation and Focus management

The input management tries to solve the following problem:
- Notify the actors when they get or lose the focus in order to enable them to display them accordingly.
- Provide a mechanism for passing the focus from one actor to another in a way that is consistent with the input keys the user presses.

The focus management offers means for directing the user inputs to the appropriate interactive parts of the applications. Normally the actors that are supposed to get the focus are displayed on the screen when the user enters inputs.

The input management is also responsible of enabling shortcut mechanisms: this mechanism makes it possible for an actor to get a key press event even without having the focus.

### Input management, Translation and Routing

The user inputs are delivered to the NE through OpenTV messages. These inputs are managed in the NE which parses and processes them. They are eventually passed to the actors. When processing the user inputs, the NE is able to perform some filtering on them such as the focus management, the routing and the translation which means the association of a specific key to an attribute.

The user inputs depend on the device actually available on the decoder. OpenTV provides for translation from the specific device data to OpenTV messages. The MEs are responsible for correctly interpreting the data.

The underlying drivers connected to specific devices are supposed to generate the code depending on the actual device (through OpenTV messages).

Possible devices are the XY pointers and the Vocal input.

User inputs are then normally passed to an actor that owns the focus (through OpenTV UIMS function). The actor may ignore them. In such case, the message is passed to the actor's ancestor. This is handled by the OpenTV automatic message routing along with the gadget tree.

Actors that handle shortcuts declare the keys they are interested in a specific attribute, *Shortcut.* When they are activated, the NE will pass them the key press message of interest.

### Circulating the focus

The focus management is performed by the NE instead of being distributed among the MEs. The circulation graph is downloaded along with the IAD. It describes how the focus must be set from one ME to another ME, for example according to the arrow keys of the remote control. It is optional. When it is not available, the NE resorts to a default management based on the LNG structure.

Some MEs may provide their own focus management. In such case, the pressing of an arrow key is an event which must be sent to them.

The circulation graph is defined on the IAD structure. Each node is associated to data that indicates for each arrow key which node must receive the focus. This data is stored in the attribute "*FocusCirculation*". Their values are a list of at most 4 couples (Left/ Right/ Up/ Down, Node ID).

### Color management

According to the present embodiment, the graphics hardware of the decoders uses a color paletteThe values stored in the palette must be adapted to the context of each application. It is the responsibility of the NE to initialize the palette with the correct values when an application is activated.

The content of the current palette depends on which Actors are displayed at a given time. Their needs are described by the Colormap attribute of the top-level Actor. The application may provide a specific version for this actor. A default colormap is provided for the application.

### Font management

The font management is entrusted to OpenTV. The font attribute value is the name of the OpenTV font. A dedicated actor may be responsible for loading the fonts that are needed by the other actors of the application.

### NEEvent and processes

The NE algorithm is based on a main loop that processes events one at a time. The events may be simple events like user input or any other system events. More specific events exist: these events deal with the management of the LNG and the actor and enable an asynchronous management. All these events are handled in a FIFO manner.

Those events may be posted by actors or by the NE itself. Possible events are:
- navigate to a node
- register an attribute modification
- change the focus location

### The network interface

The network interface is the module in charge of the exchange of data between the NE and the external world. This data includes:
- Non-real time data (although some data may need to be loosely synchronized with the a/v materials)
- Real time data a/v materials

The external world is made of a broadcast flow (133), a bi-directional flow (131) and a data storage medium (140):
1. The broadcast flow (133) is managed by OpenTV through the concept of program that includes both real-time and non-real time data.
   The non-real time flow is structured by OpenTV modules. Each of them has a unique ID and a size. Their transmission over the network is likely to be cycled. The number of possible types of modules is potentially large but the number of types of modules that can be simultaneously waited for is small (dependent on local hardware resources, this number may be as an example from 30 to 70).
   The Open TV module ID provides a first naming scheme within these data. This naming is currently limited to the scope of a so-called OpenTV application.
   The real-time components of a program are also accessed by ID.
2. The bi-directional flow (131) conveyed by the serial port or the modem, referred to as 'the return channel' is managed by OpenTV through the concept of program provider with which bi-directional connections may be established (OpenTV sockets). Asynchronous message exchanges can take place over this channel. Connections with many services may be open at the same time.
   Future TCP/IP may replace the OpenTV sockets.
3. The data stored on any media or data storage (140) connected to the decoder, namely a DVD, DVD ROM or CD ROM. There is no standard protocol designed for handling data exchanges with this media although DSM CC deals with this subject.

The goal is to provide an interface for the NE that hides the details of the underlying network. However, actual devices have various capabilities that must be taken into account. The needs of the NE regarding the network are as follows:
- Receive pieces of IAD or IAD messages asynchronously, i.e. without having to request anything. The size of these data is known in advance. It should be noted that the number of data required at a given time may be small compared to the total available;
- Receive pieces of IAD or IAD messages synchronously, i.e. involving a request followed by an answer;
- Receive data for the data loading.

The solution is to defined a naming scheme which encompasses the three media along with a set of functions that ultimately rely on the available network management layers. This naming scheme is used for selecting a/v data and also within the LNG when portions of the LNG are addressed from a portion which has already been loaded. The names will be translated by the NE into the lower protocol syntax.

The naming scheme is based on service names and component names: <service name>,<component-x>,<sub-component-y>... .The NE is in charge of resolving the name to determine from which type of source or network the corresponding data should be loaded.

### Example of an IAD and its associated graph

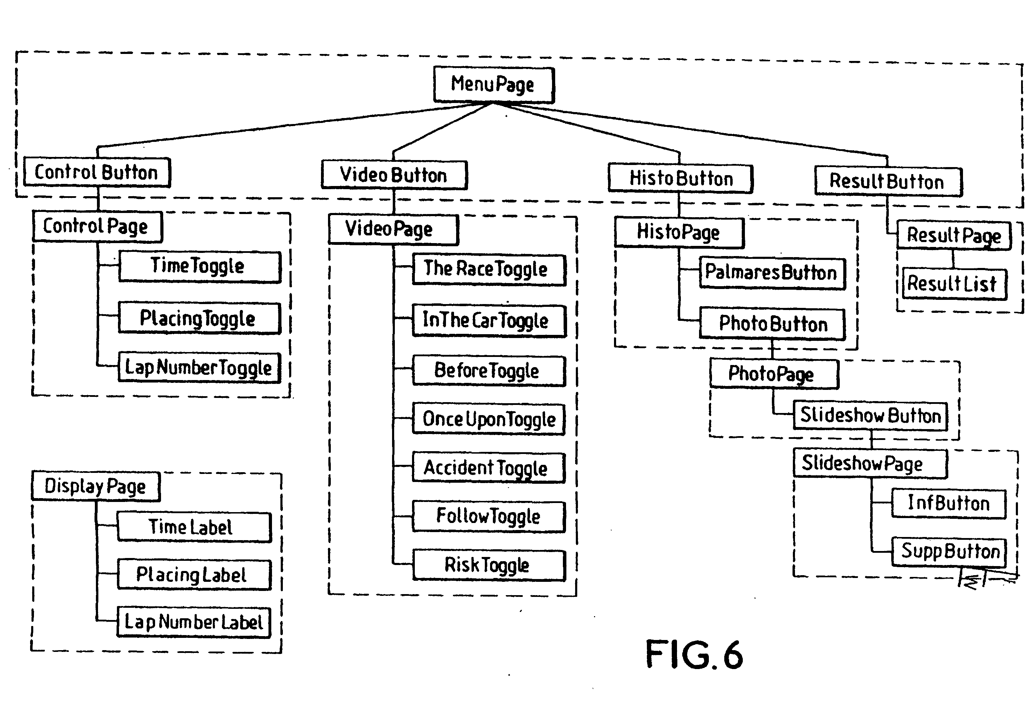

Annex 1 and figure 6 will be used to describe an example of an interactive application, concerning a car race. For an overview of the application, the structural and navigational links of the corresponding IAD are illustrated by the graph of figure 6. The object hierarchy is the following:
DisplayPage
TimeLabel
   PlacingLabel
   LapNumberLabel
MenuPage
ControlButton
   ControlPage
   TimeToggle
   PlacingToggle
   LapNumberToggle
VideoButton
   VideoPage
   TheRaceToggle
   InTheCarToggle
   BeforeToggle
   OnceUponToggle
   AccidentToggle
   FollowToggle
   RiskToggle
HistoButton
   Histopage
   PalmaresButton
   PhotoButton
   PhotoPage
   SlideshowButton
   SlideshowPage
   InfButton
   SuppButton
ResultButton
   ResultPage
   ResultList
TheRaceVideo
   InTheCarVideo
BeforeVideo
OnceUponVideo
SlowVideo
AccidentVideo
FollowVideo
RiskVideo
ClearButton

For clarity's sake, the last series of objects is not illustrated on figure 6, since their links are quite simple. Note that in figure 6, objects belonging to a same screen are surrounded by dashed rectangles. Not all objects of a same screen need to be displayed at a given time: this depends on their state, as will be seen later in conjunction with Annex 1.

The application runs before and during the broadcast of a car race. It enables the user to access real-time and archive information relating to the race, as well as to switch between several video streams. All video streams may not be available at all times, but the IAD provides the necessary nodes to access information and video streams which may eventually be available. For example, an accident may or may not happen during the race. If an accident does happen, the user may wish to view the specific footage relating to this event, and the corresponding nodes and actors will be activated. Else, the nodes are not used.

The application illustrated by figure 6 consists in a single cluster, which is loaded as one piece. The application is broadcast cyclically before and during the broadcast of the race event. In a digital television system, the data relating to the application is included in the digital multiplex, encapsulated in the transport layer packets. In an analog television system, such packets are modulated in the Vertical Blanking Interval of the video signal. Such broadcasting is well known in the art and will not be discussed in further detail. The decoder detects the packets relating to the application by checking the packet identifiers in the headers of the broadcast packets, and demultiplexes the packets corresponding to a predetermined identifier.

Top nodes, such as MenuPage and DisplayPage, are mapped and activated once the IAD is loaded, followed by the mapping of the sub-nodes. Note that the initial value of attribute 'Mapped' present in the nodes of the IAD of Annex 1 indicates whether the node should be displayed, not whether it is actually to be associated with an actor.
Each node of the IAD has an attribute called 'Actor', which defines the actor class, i.e. its function. For a given node, the NE selects an actor corresponding to that class (several actors may be available) and creates an instance of the actor for the node.
Activation of the MenuPage node and its sub-nodes results in the display of the main page explained below. Activation of the ControlPage node does not initially generate a display at first, since all 'Mapped' attributes of the node's sub-nodes, and of the node ControlPage itself, have the value 'false'.

The IAD according to the present example comprises a main page, called MenuPage, comprising four buttons which the user may activate: ControlButton, VideoButton, HistoButton and ResultButton.

The code for all four buttons indicates that they should be associated with an actor of a class called 'pixmap'. This actor requires a bitmap picture for its display. The identifiers of the pictures are given as values of the attribute 'Image'. When associated with an actor, the image attribute values of a node are read by the actor, which will then request from the Navigation Engine the downloading of the corresponding bitmap, if it has not been loaded before.

The ControlButton gives access to a second page (ControlPage), containing three toggle buttons. Toggle buttons are actors which have a binary state, the user being able to switch from one state to the other, hence the term 'toggle'. The ControlPage is designed to enable the user to select the basic information he wishes to have displayed on his screen, through the node DisplayPage: the time lapsed since the beginning of the race (sub-node TimeLabel of the node ), the ranking (sub-node PlacingLabel of the node) and the lap number (sub-node LapNumber Label of the node DisplayPage). It will be noted that the attributes 'Mapped' of the three sub-nodes of the node DisplayPage are at the value 'false' per default, as can be seen in Annex 1. This means that they are not displayed until the user changes the state of the toggle buttons in the ControlPage, which in turn leads the corresponding actors to modify the value of the 'Value' attributes of the Toggle nodes, which in turn activates the links of these nodes which modify the value of 'Mapped' attributes. The NE performs the display of the corresponding actor when its 'Mapped' attribute has the value 'true'.

The VideoButton gives access to a screen for selecting one among a plurality of video streams. The VideoPage contains a maximum of seven toggle buttons (depending on the availability of corresponding videos), of which only one can be selected at a given time. Toggle buttons which are not selected are displayed in grey (attribute 'Greystate' equal to true). The selected button indicates which video stream is to be displayed.

The associated video streams are represented by other nodes, to be associated with actors of the 'video' class. While the video stream is handled by the video actor proper, additional on-screen graphics are activated directly from the node. One of these nodes, the node 'TheRaceVideo', will now be described. Most of the aspects described in relation with this node also apply to the other video nodes.
Two cases are distinguished by the node, depending on whether the corresponding video broadcast has begun or not. The information relating to the location in time compared to the beginning of the 'Race' video stream is given by the attribute 'TimeCode', the value of which is negative before the race and positive during the race. It is a value which according to the present embodiment is broadcast in the digital multiplex, and determined by the broadcaster, who is the only one to know whether and when a video will be available. The 'TheRaceVideo' node indicates on-screen if and when the corresponding video is to be expected. This is done by modifying the 'Text' attribute in the 'TheRaceToggle' node.
Depending on the sign of the attribute, calculations are made either of the time in minutes to be waited until the race video starts, or the remaining broadcast time, once the video has started.

Thus, the behaviour of the toggle button 'TheRaceToggle' is the following: when no value of the 'TheRaceVideo.TimeCode' attribute is present in the digital multiplex, the toggle button displays the initial text, i.e. 'The Race'. Once the attribute is given a value, and as long as this value is negative, the button displays the text 'XX mn The Race', where XX indicates the time left before the beginning of the race. When TimeCode turns positive, the text 'The Race YY mn" is displayed, where YY indicates the time left before the end of the race.
The variable 'Run' is a variable whose value is determined by the associated actor. 'Run' is set to 'true' once the node is mapped, i.e. when 'TimeCode' is greater than 0. It is used within the node to change the display status of the corresponding button and allows its selection by the user.

As can be seen, the insertion by the broadcaster of the TimeCode variable, for a specific node, into the digital multiplex, triggers a number of actions by the IAD and the actors. In this way, the real-time behavior of the interactive application can be changed.

The variable 'Value' is used to pass the status of the button between the actor and the node, i.e. the information relating to the selection or not of a button by the user. Change of the status of a button will trigger actions defined in the IAD. Initially, the only button with active status (Value = true) is the TheRaceToggle button. The value of the 'Value' variable for the TheRaceToggle node is tested at the end of the IAD code, along with other variables for other nodes. These tests are not part of a determined node. These 'orphan links' are included by the NE into a generic node when the IAD is loaded. The test concerning the TheRaceToggle node is the following: when the button is selected ('Value' being true in this case), it is tested whether the video has started or not (TimeCode>0). If this is the case, then the 'Mapped' variable of the node is set to 'true'.

Annex 2 is an example of C code, using OpenTV functions, for an actor which is of the Text Button class. The actor is composed of a number of functions and data structures. Some of the function are known by the Navigation Engine, and form the Application Programmable Interface of the actor. Others are accessible only by the actor itself.
Actor API functions include Create Actor (function 'CreateMEButton' called when the actor is mapped to a node), Delete Actor (function 'DestroyMEButton' called when the actor is 'unmapped') and Notify Actor (function 'NotifyMEButton' called when the actor is to receive an event handled by the NE).
Data structures include parameters for the definition of the appearance of the button in its different states (Focused-desc, Idle_desc, Down_desc).
Functions also include a function to set the graphical button state (function set_button_state). This function calls the appropriate OpenTV functions which manage the on-screen display, using the previously defined parameters.

Another important function is the function which defines the events accepted by the actor (function button_message_handler) and which passes on these events to the actor's internal functions.
Two functions are used for navigation and button activation/deactivation purposes: handle_key_up and handle_key_down.
Lastly, the actor comprises a function for reading node attributes when the actor is mapped. This function is called MEButtonReadAttrs in Annex 2. In the present example, three attributes are read: 'Text', which defines the text label of the button, 'XY', which defines the position of the button on the screen and 'Activate' which corresponds to the 'Value' variable of Annex 1. This variable's value may be modified by the actor and the new value rewritten to the node.

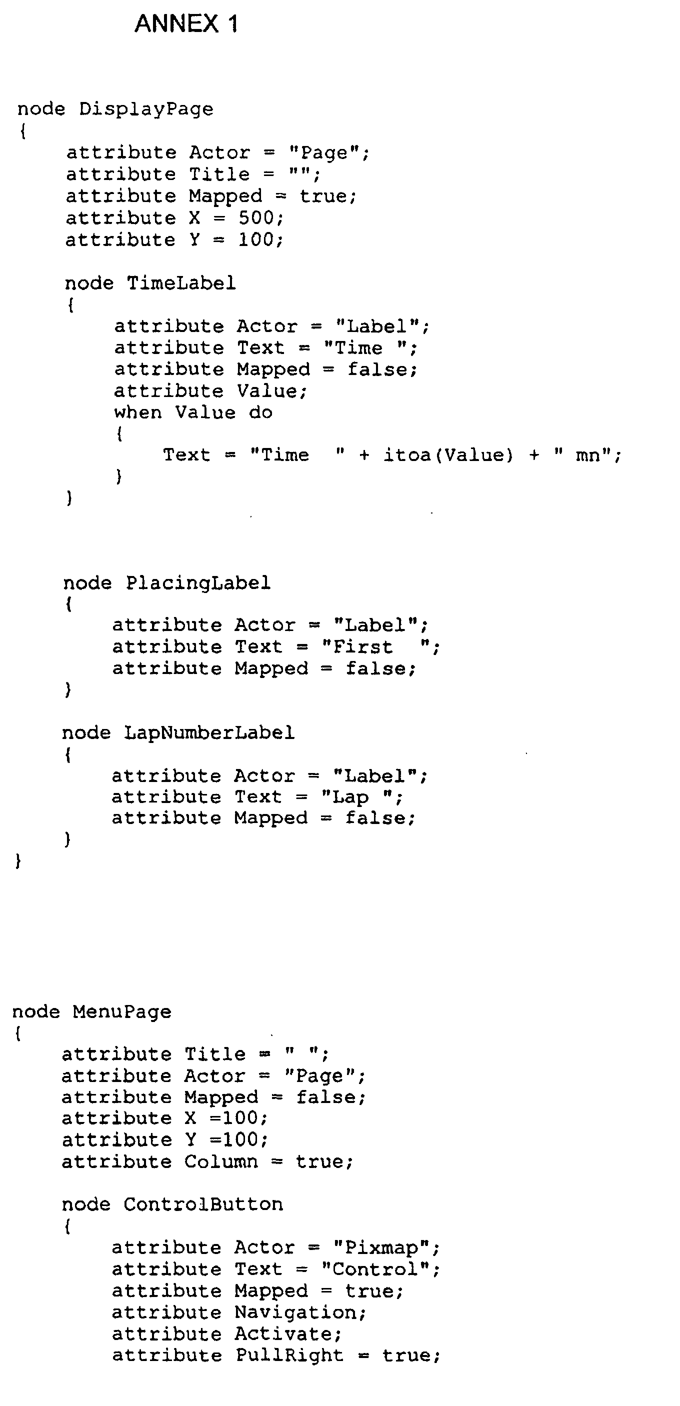

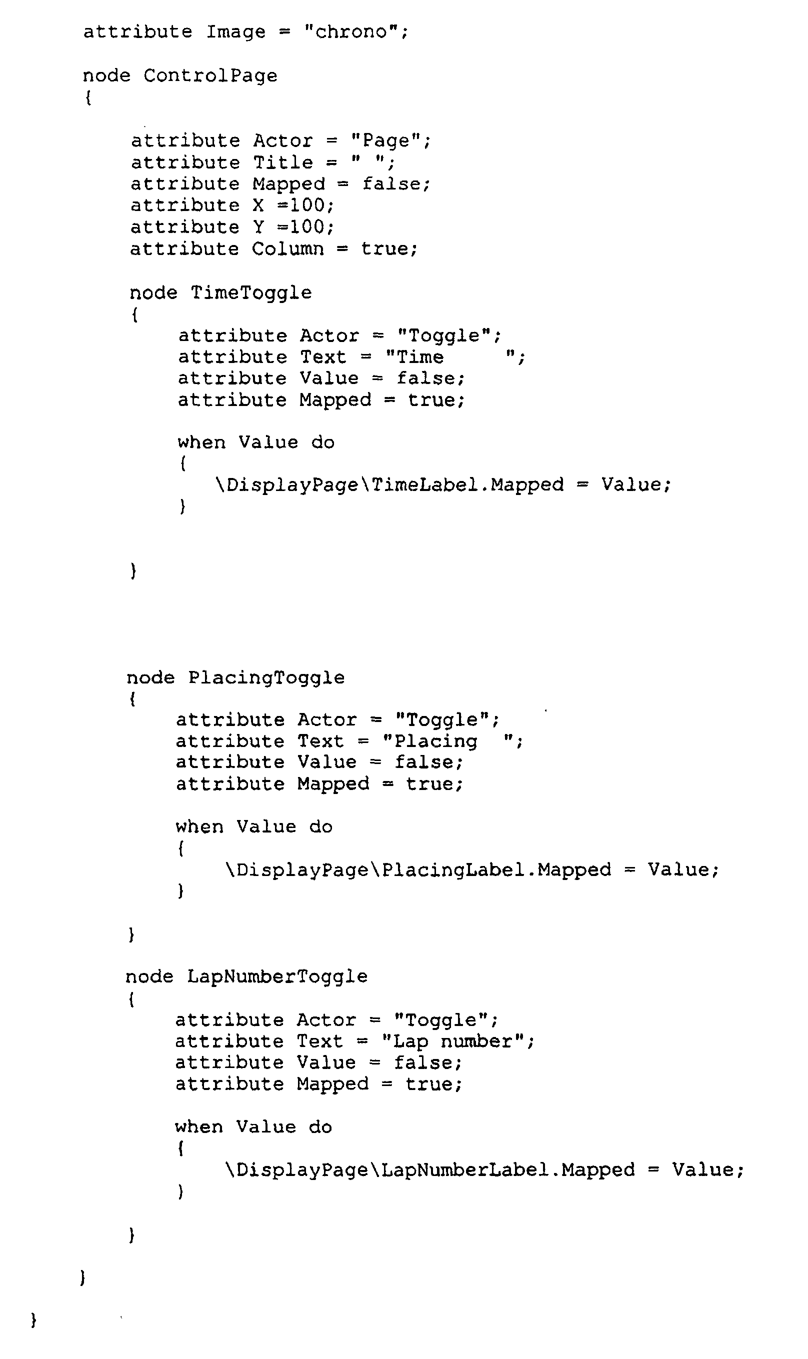

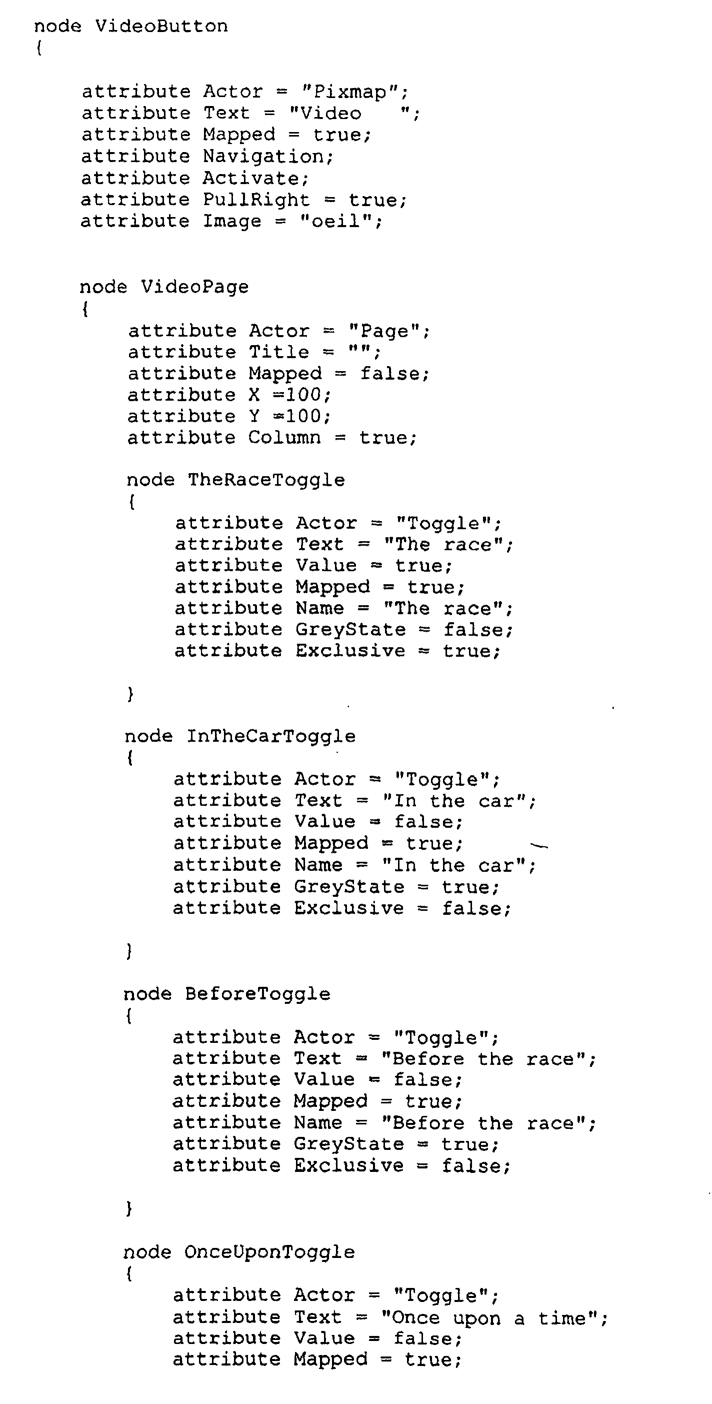

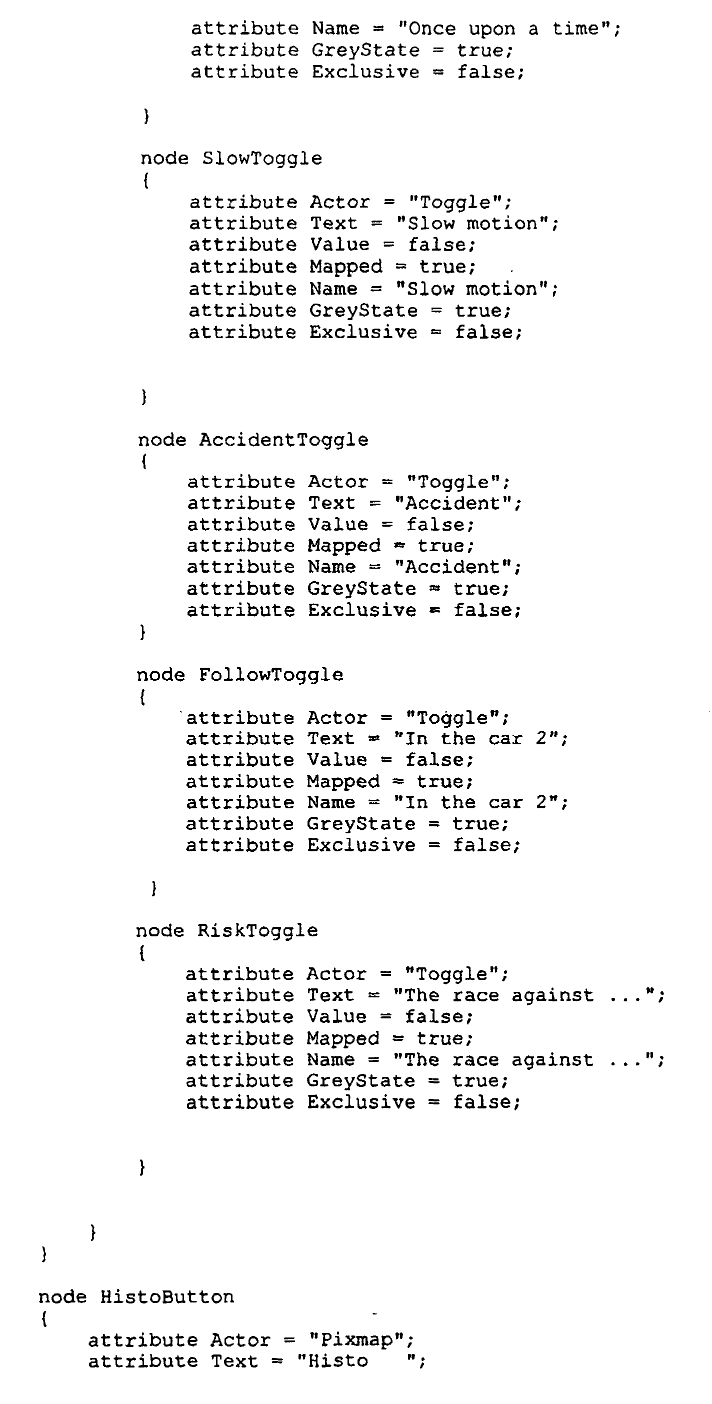

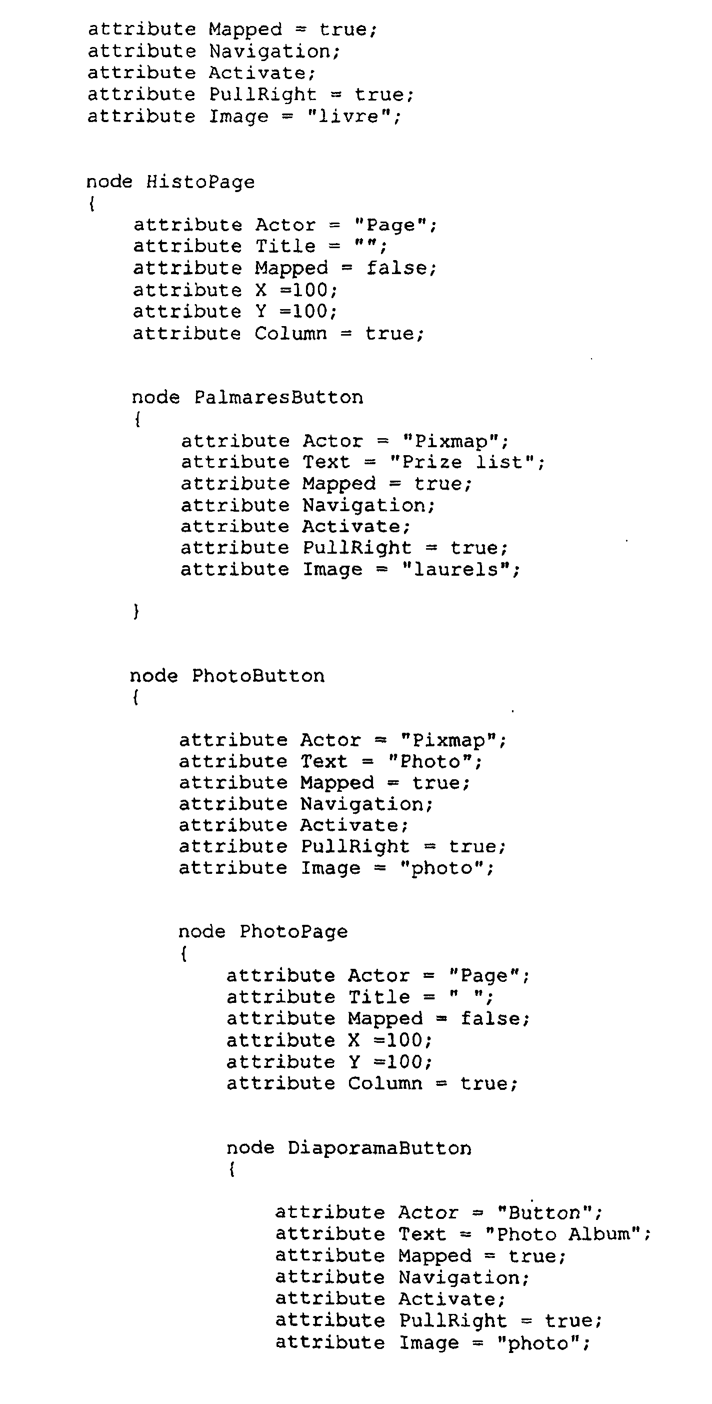

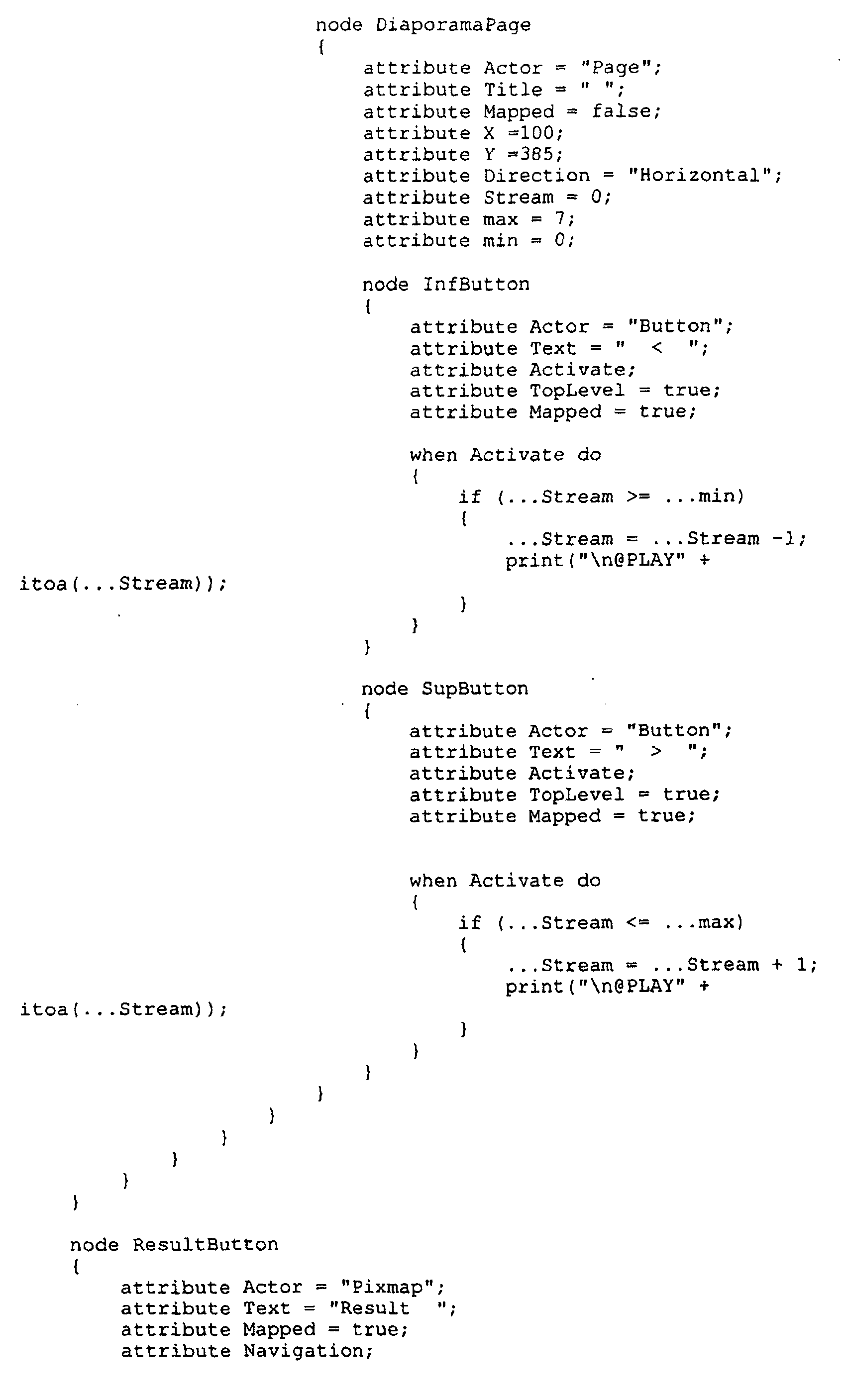

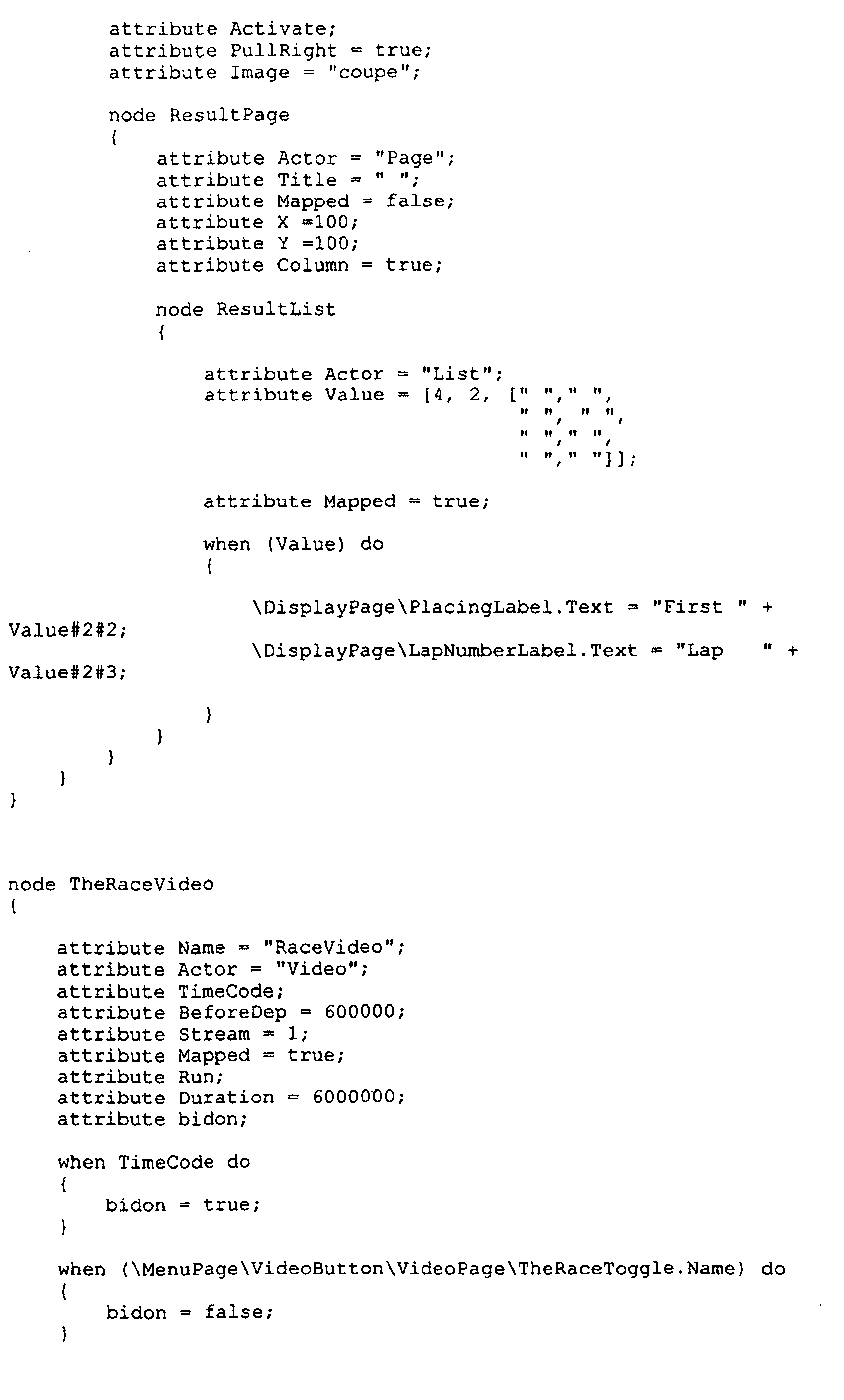

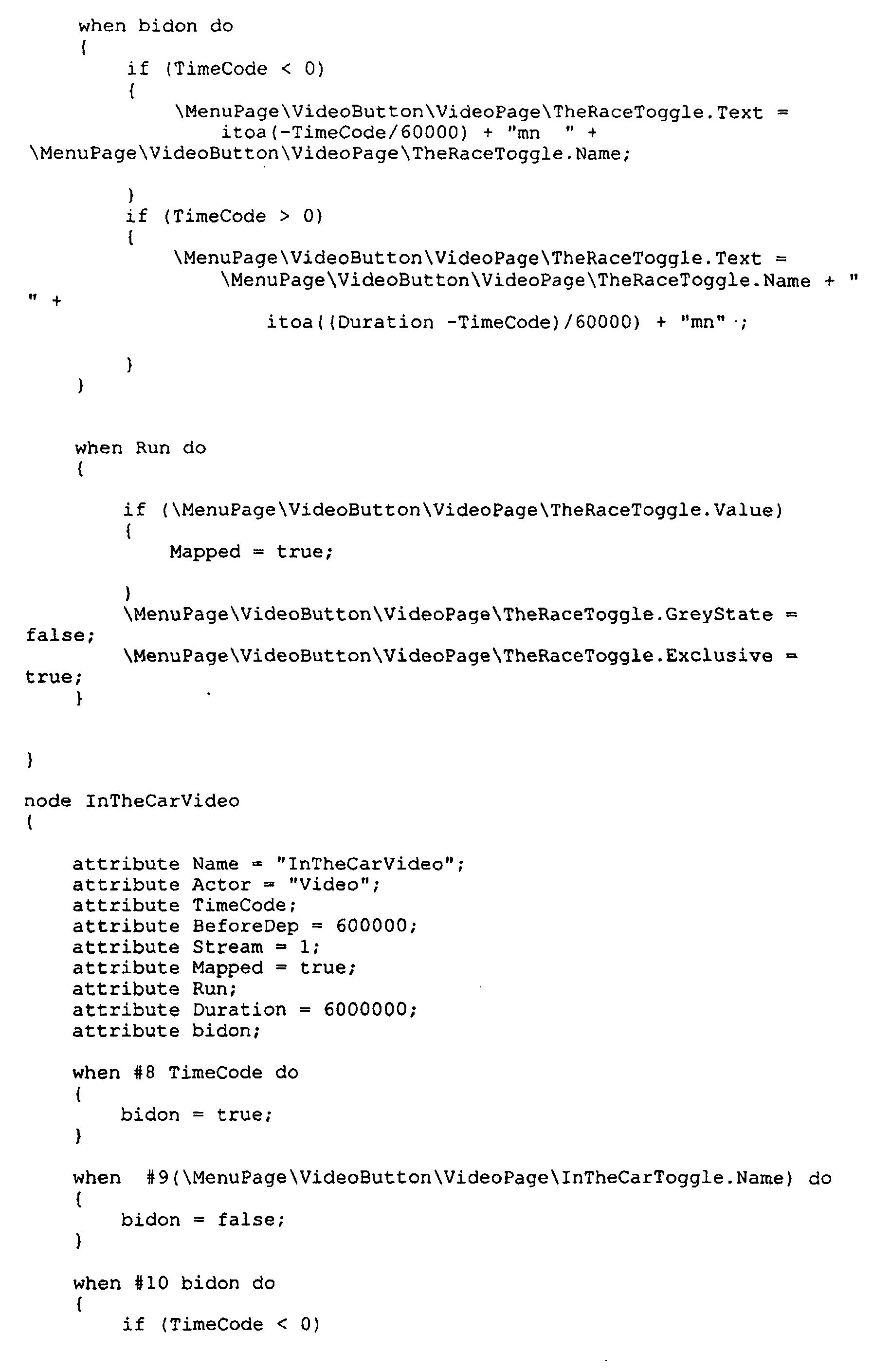

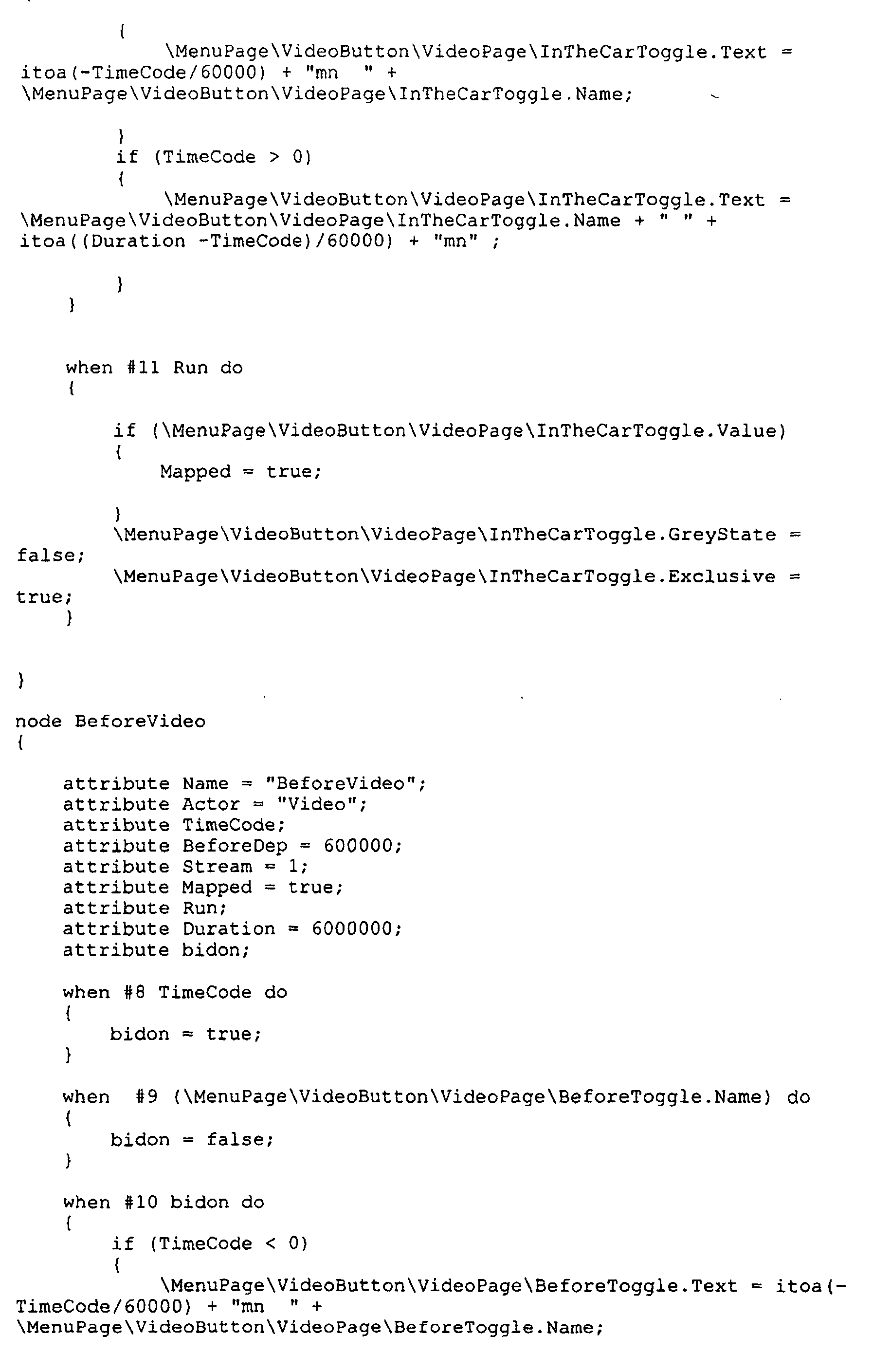

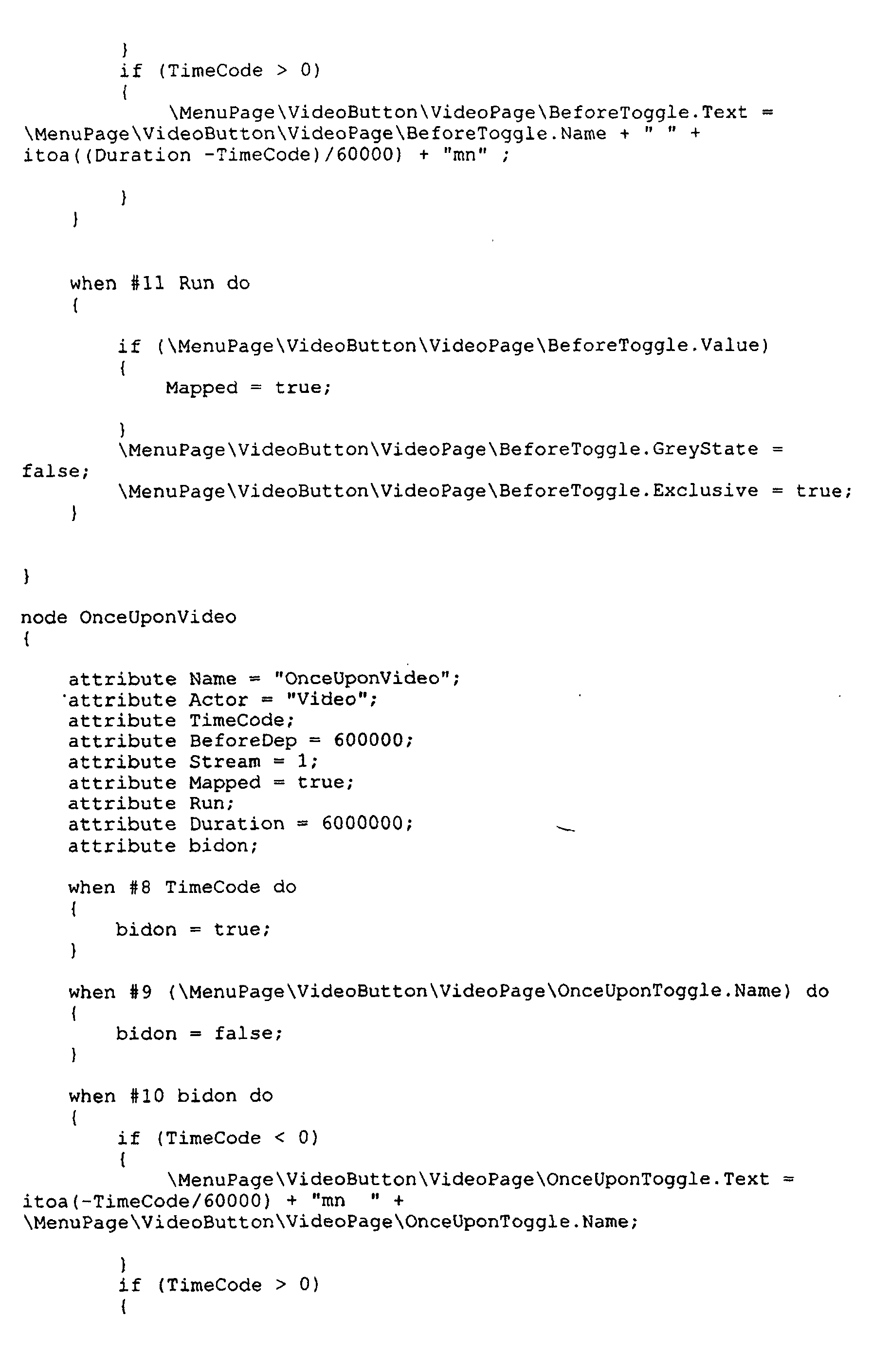

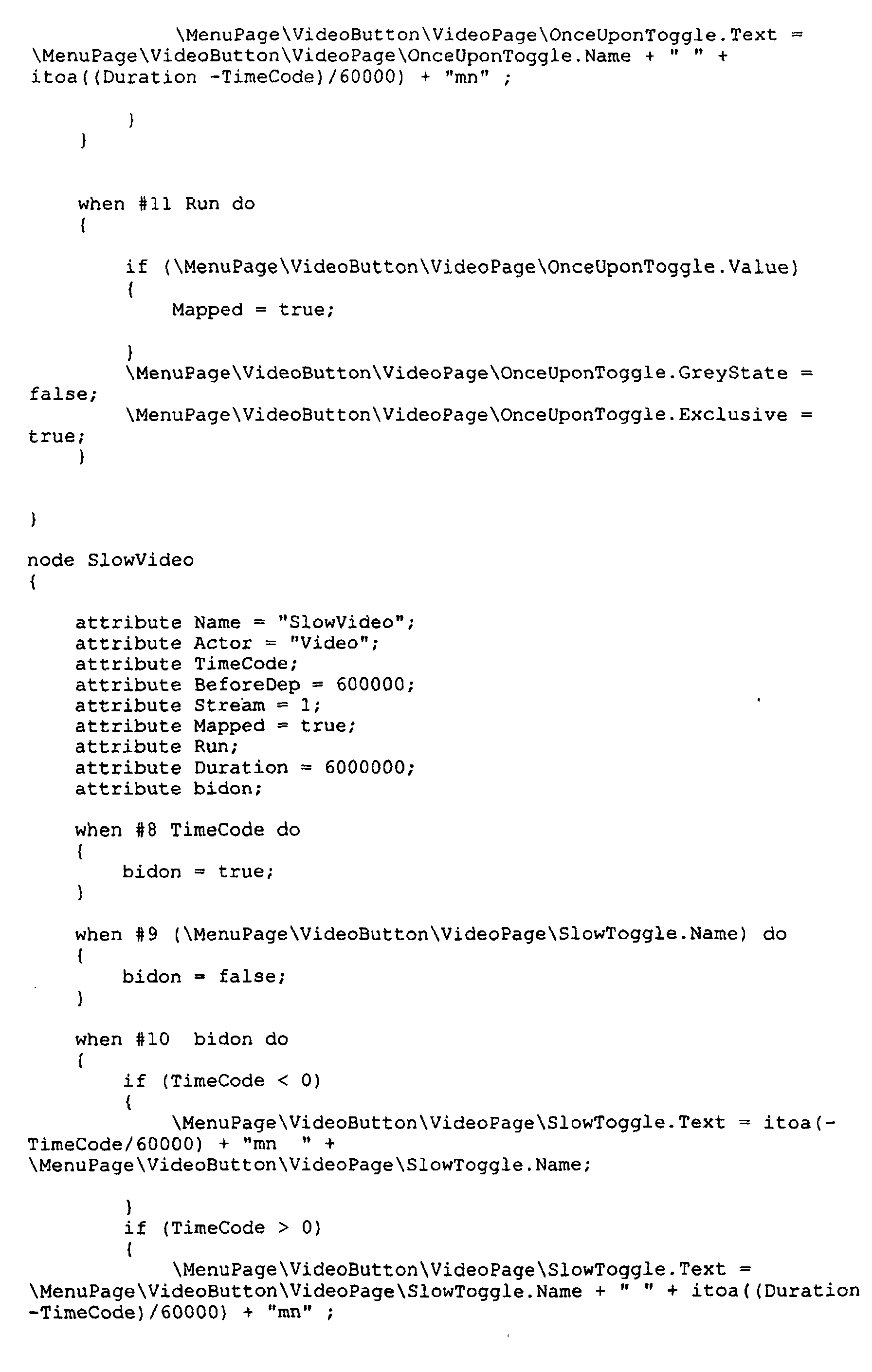

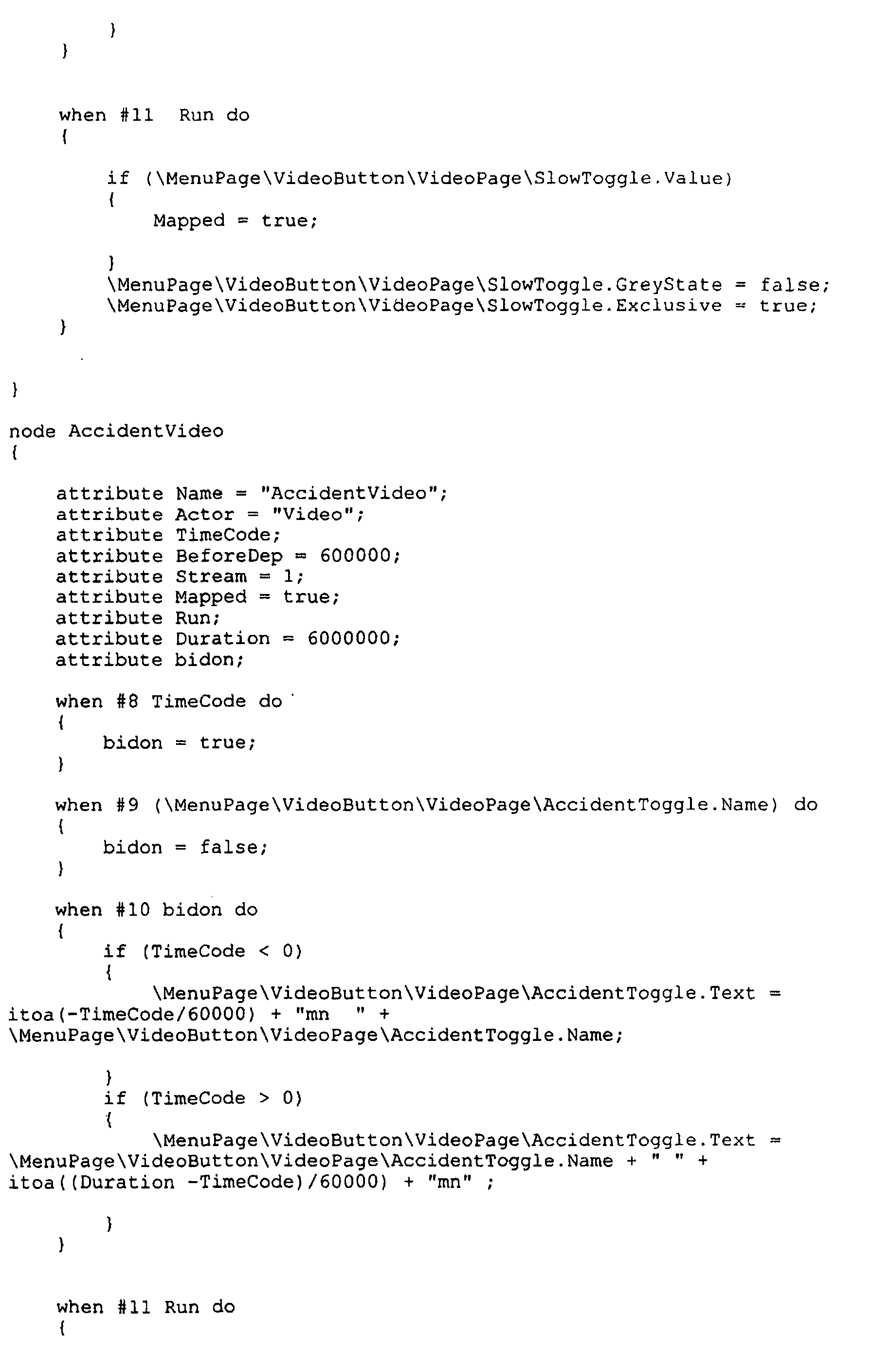

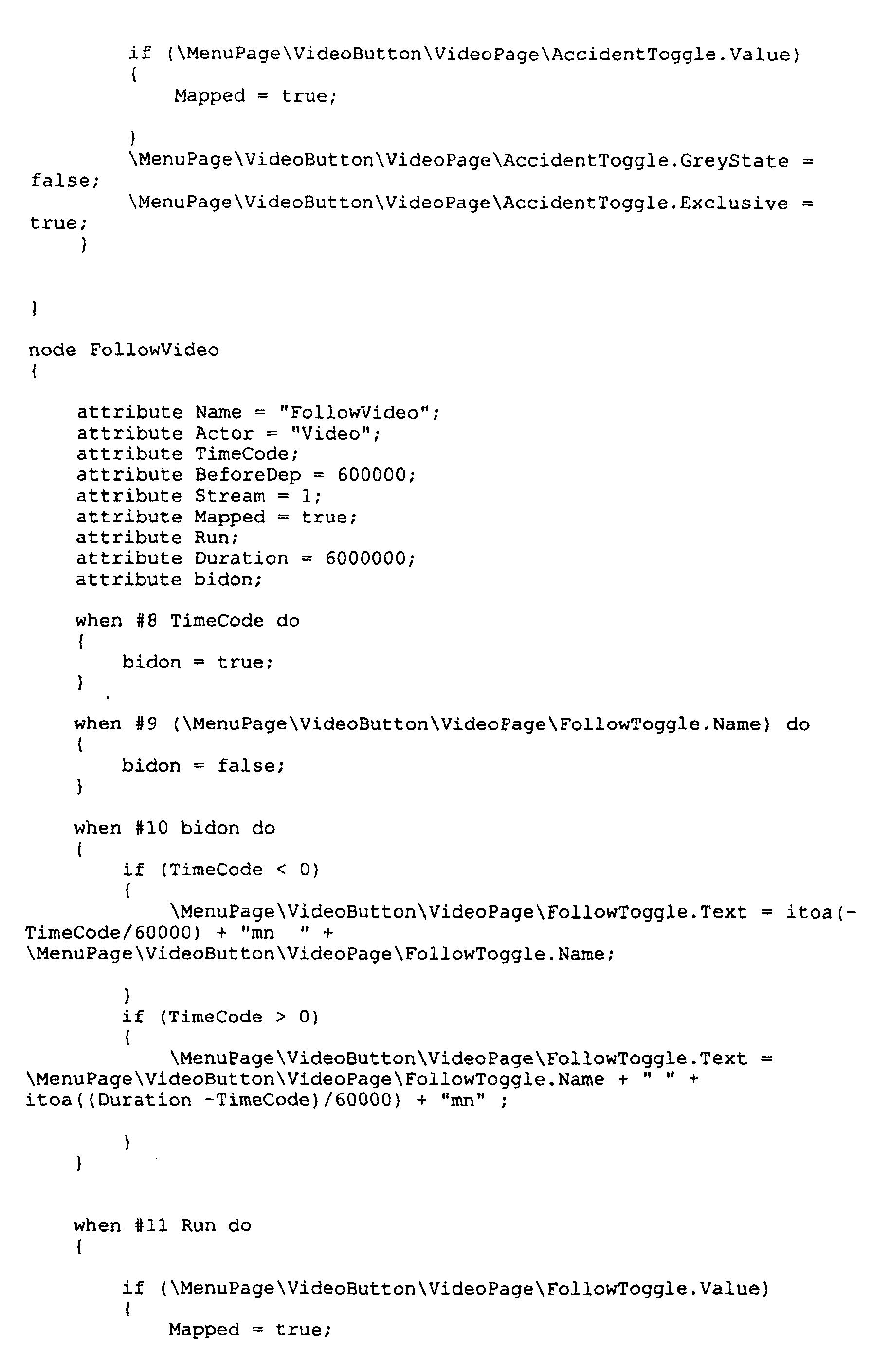

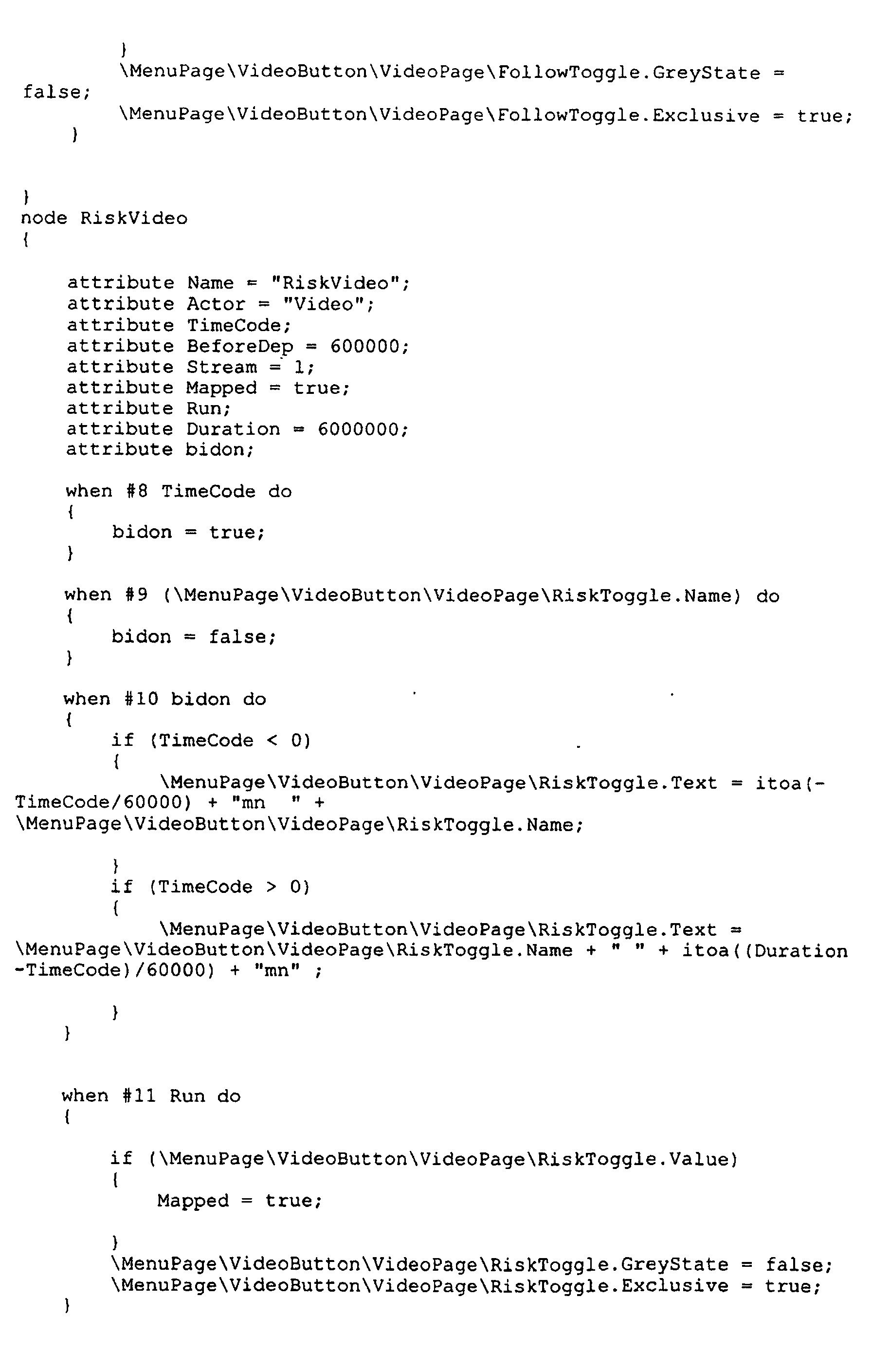

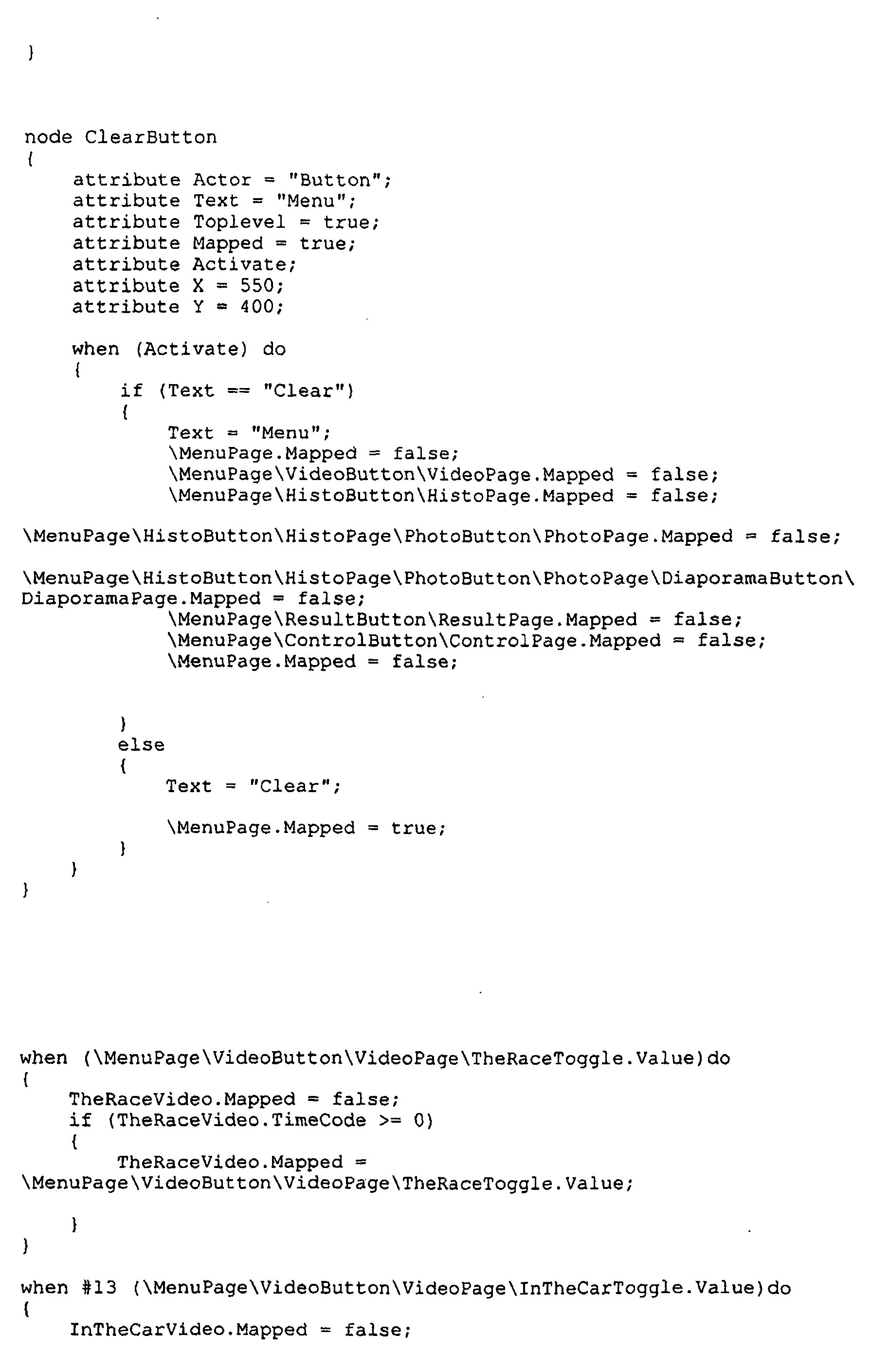

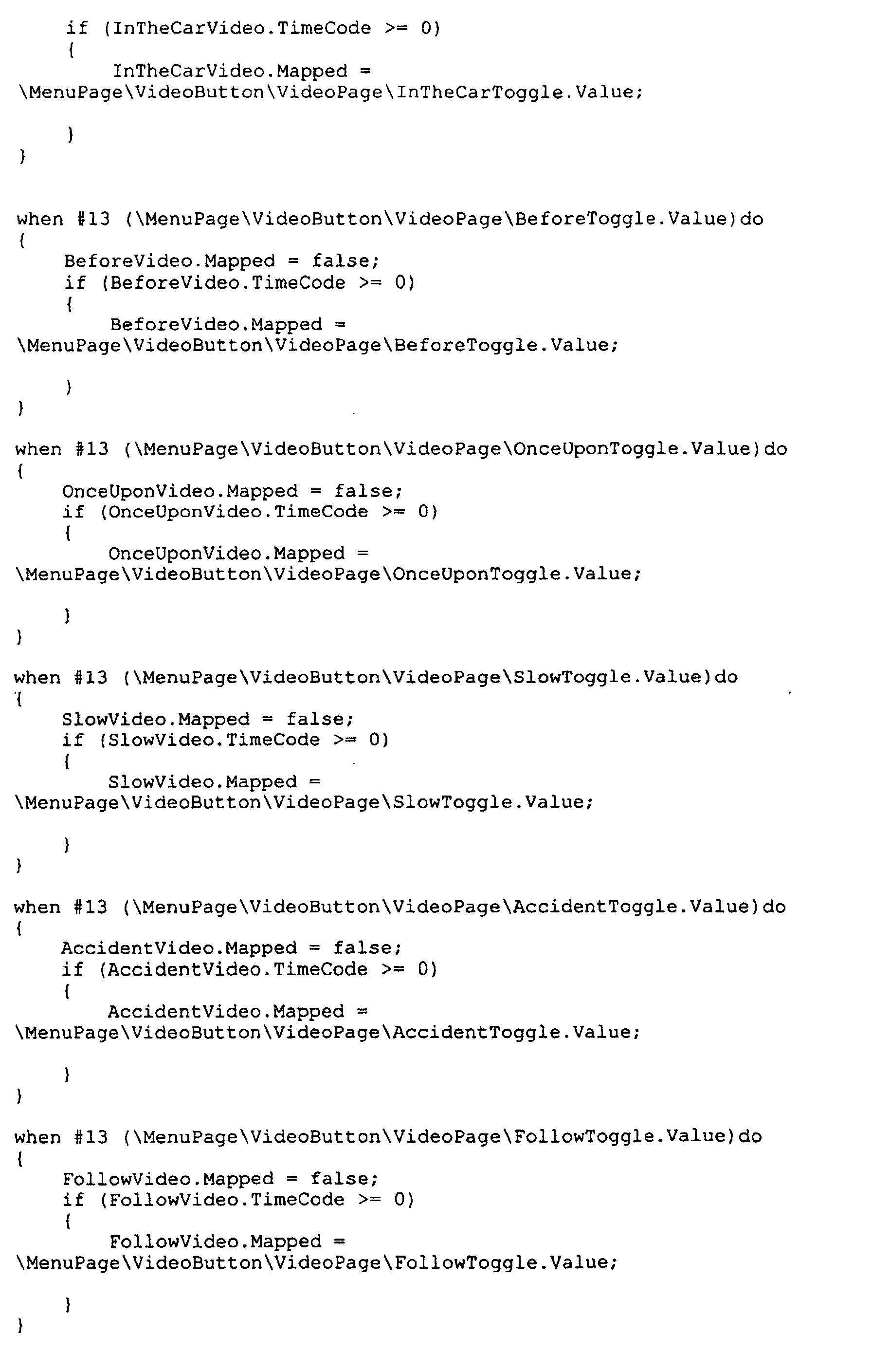

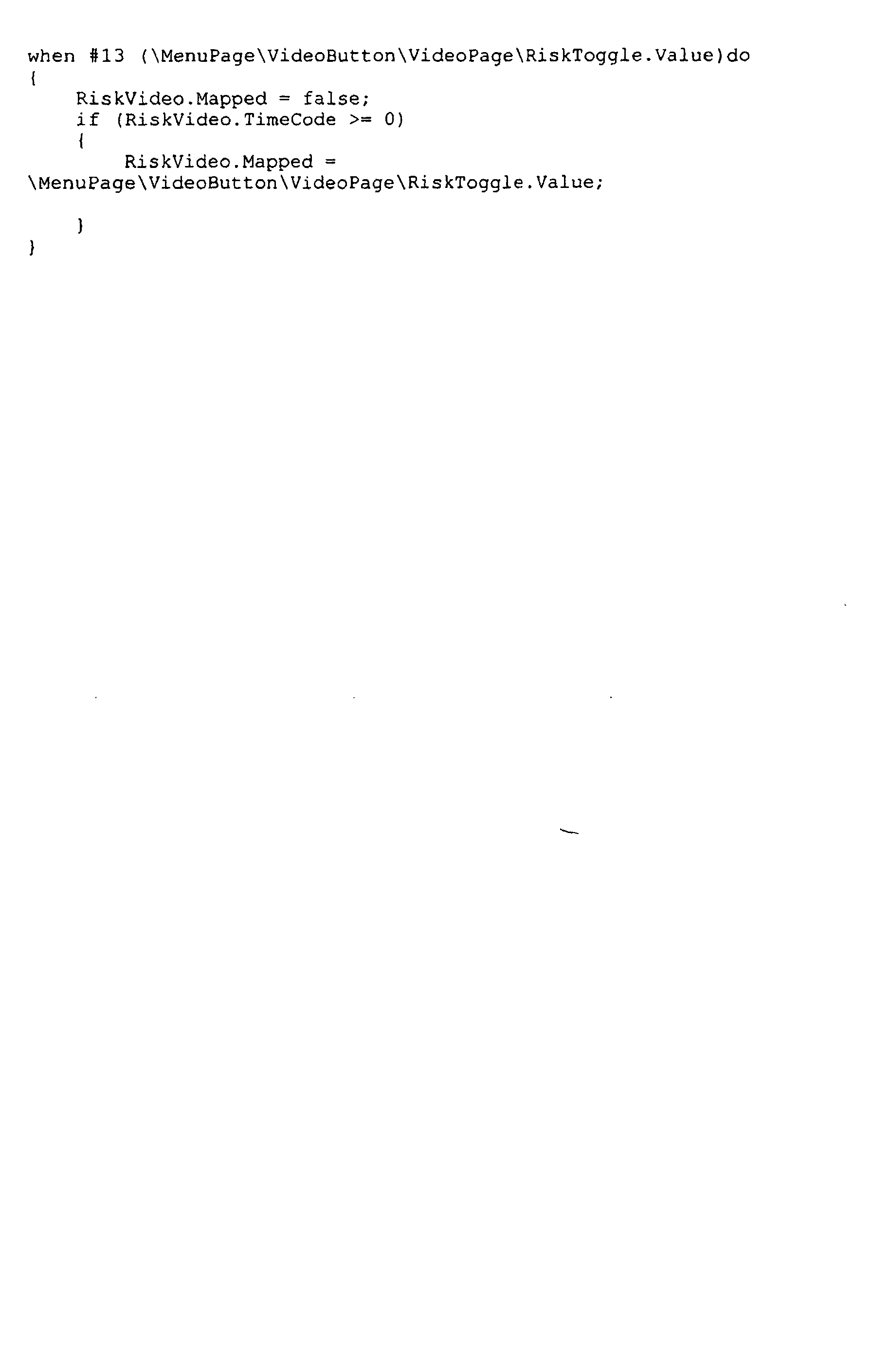

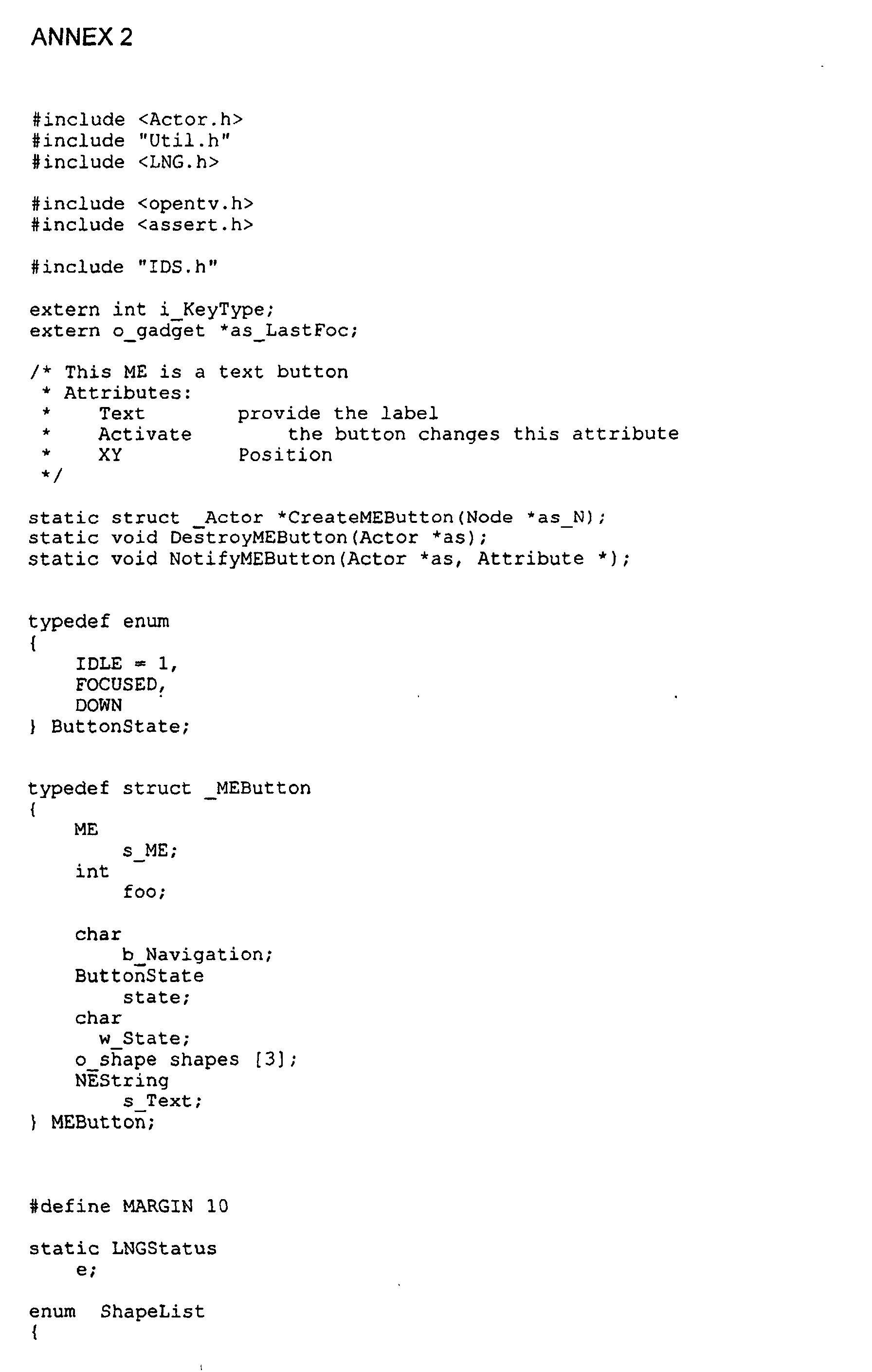

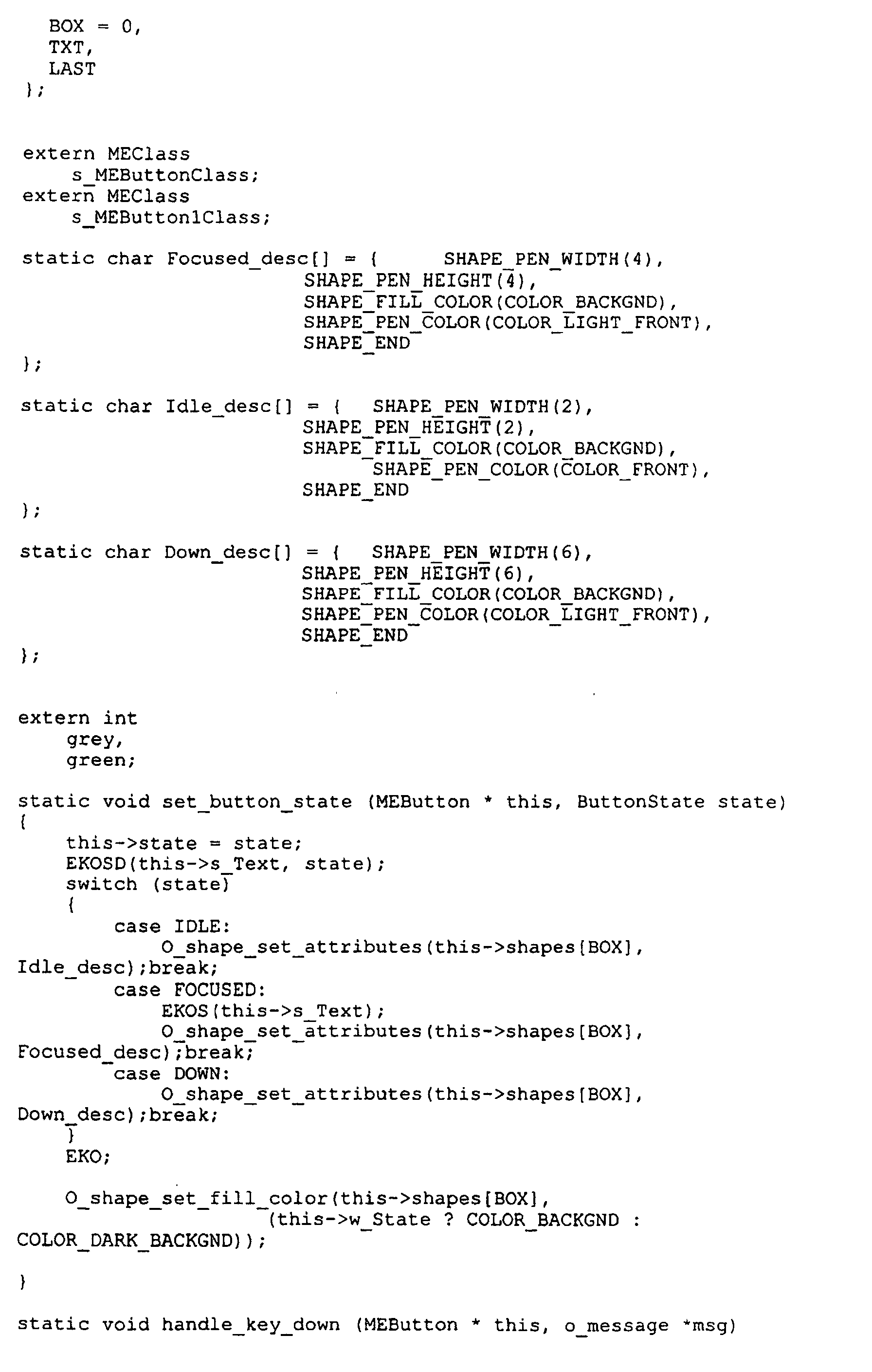

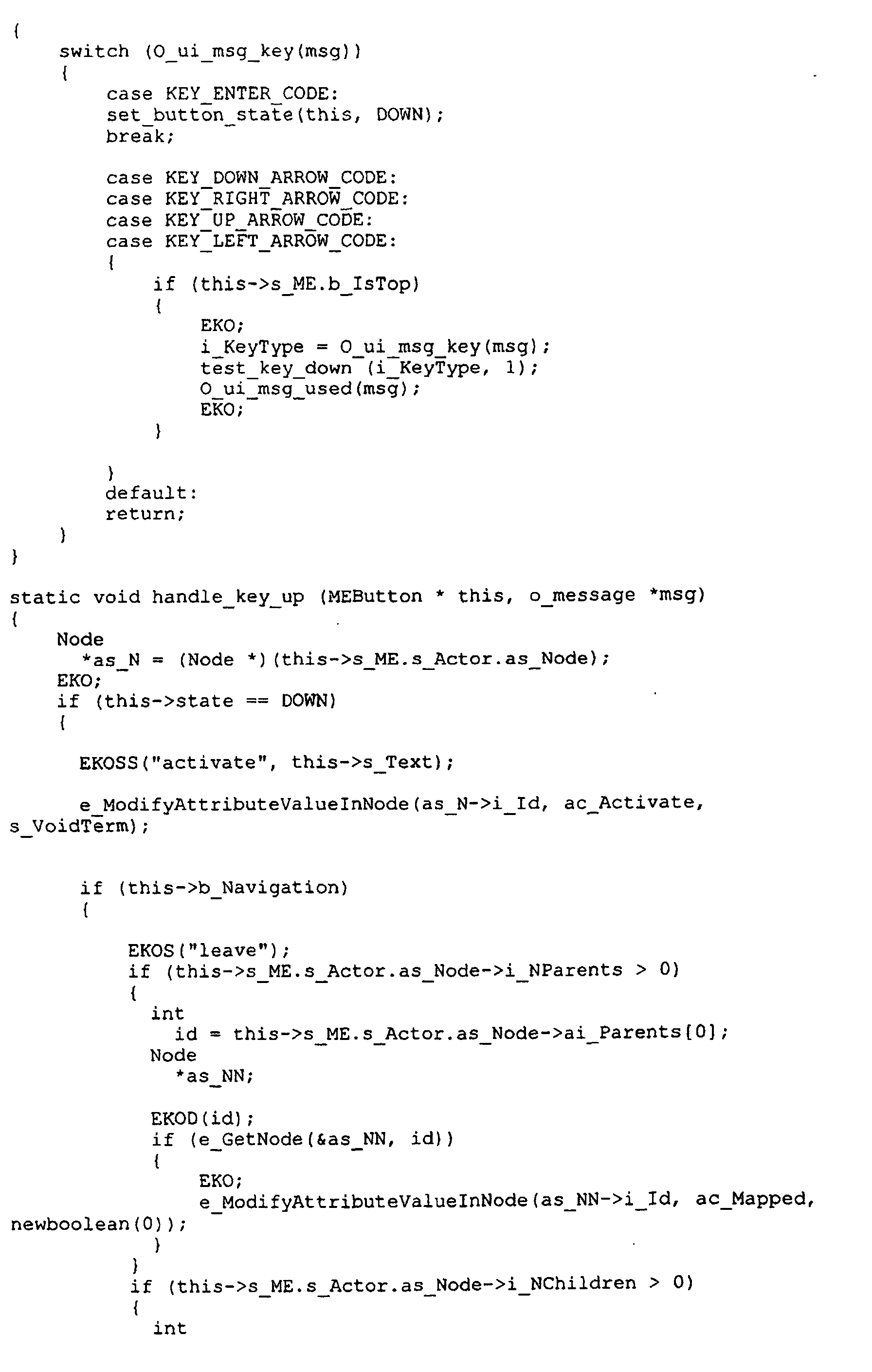

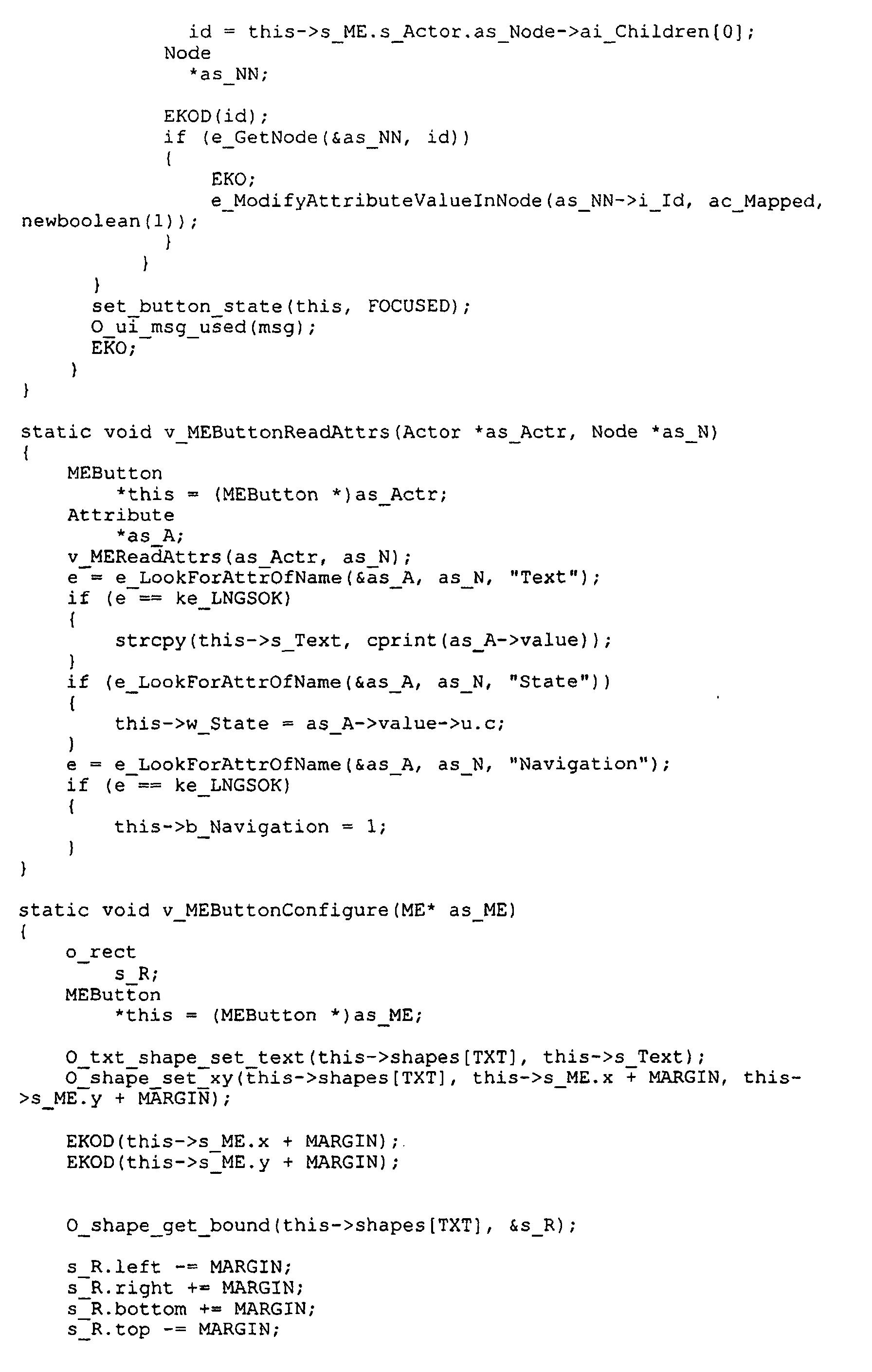

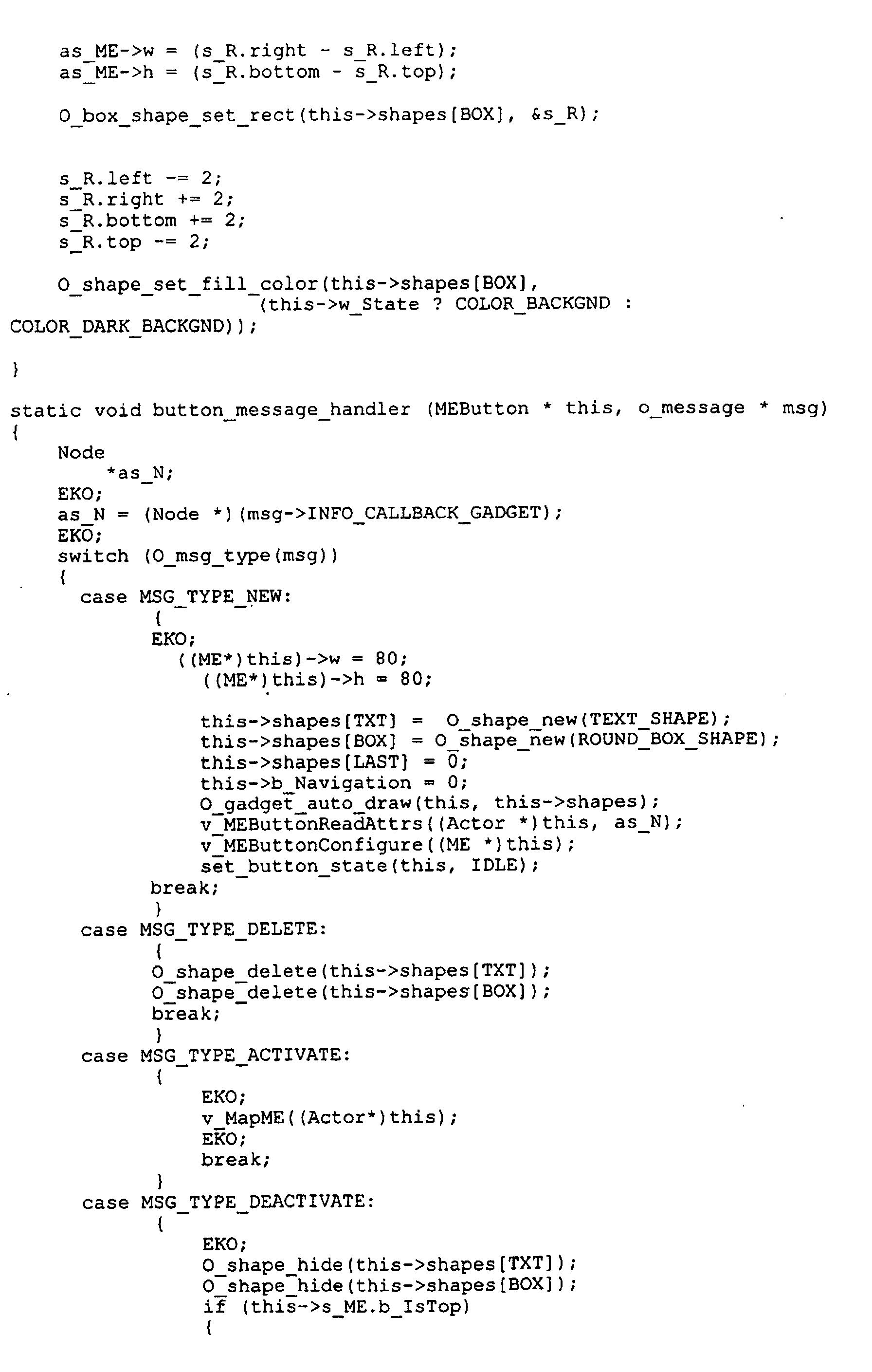

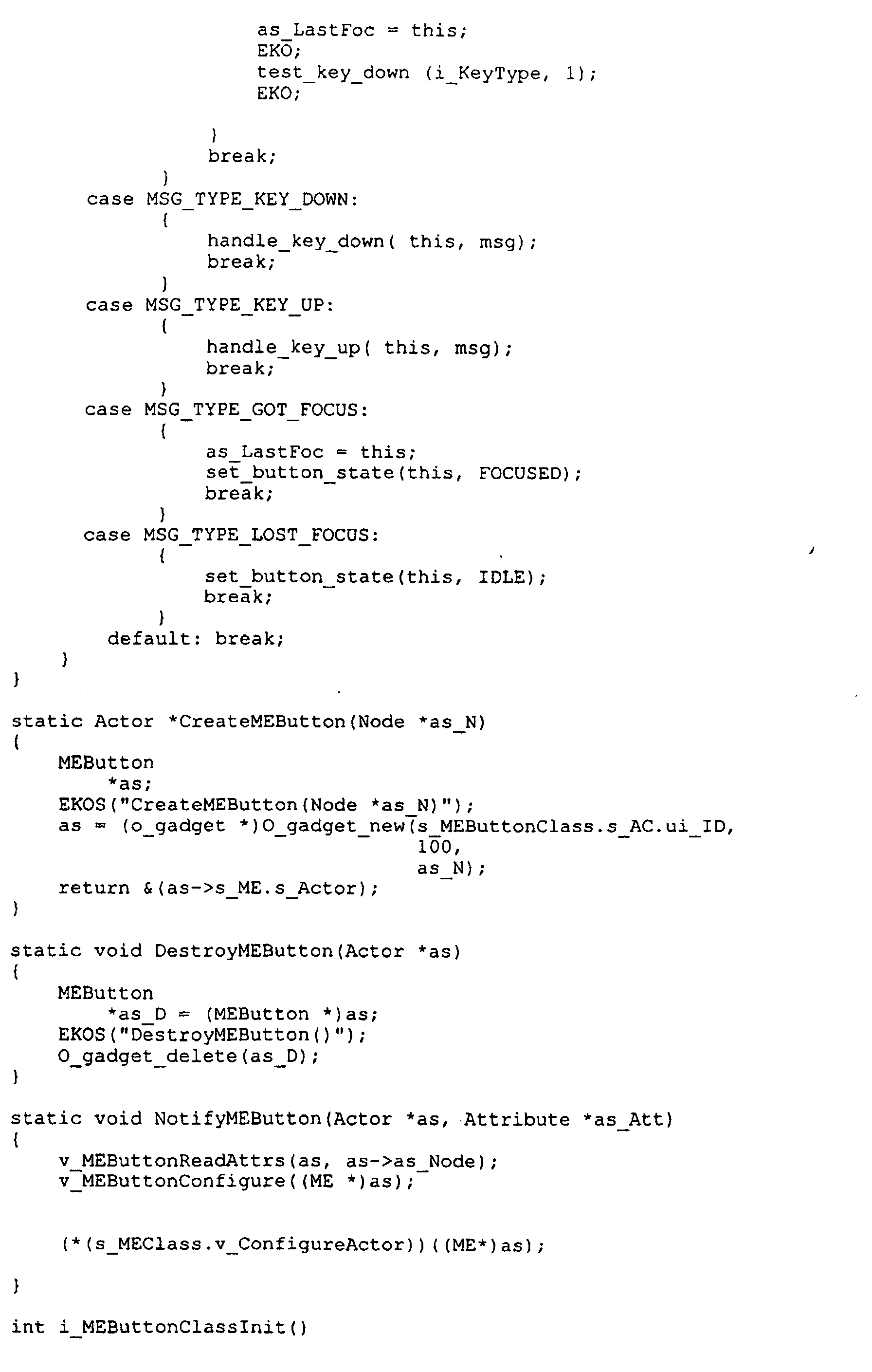

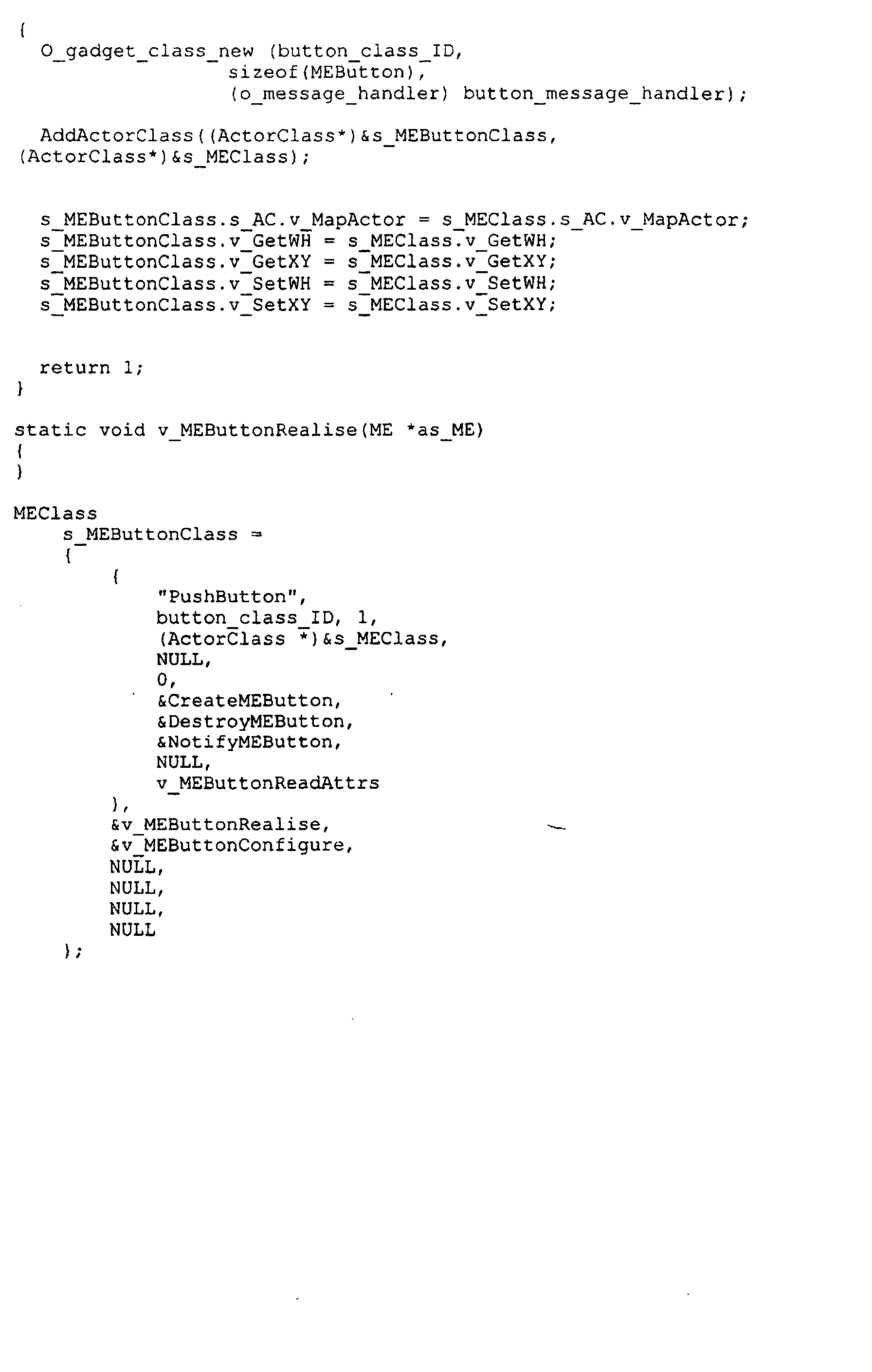

## Claims

1. A method for executing interactive multimedia applications transmitted from an interactive multimedia applications source (140, 150, 160) to a processing means (130) in a television receiver;
said method **characterised in that** it comprises the steps of:
(a) loading an interactive multimedia application (210) into said processing means (130) wherein said interactive multimedia application comprises a plurality of nodes (211,212,...) forming a graph for data representation and a plurality of navigation links binding said nodes for dynamic representation, each node owns a set of attributes, nodes being connected by structural links and navigation links, the receiver containing basic interactive elements;
(b) associating nodes of the interactive multimedia application with at least an basic interactive element for creating a graphical representation (220) composed of Interactive elements (221,222,...) where said interactive elements represent an interface between said nodes and a user (120);
(c) executing said interactive multimedia application in said processing means (130) in response to user's navigation commands and according to the navigation links.

2. The method according to claim 1 wherein said nodes are linked by structural links for supporting representation of said plurality of interactive multimedia applications on a displaying means (110) and navigation links for navigating in said plurality of interactive multimedia applications.

3. The method according to claim 1 or 2 further comprising the step of defining sets of nodes (410,420,...) connected together to form clusters representing minimum interactive multimedia applications.

4. The method according to claim 3 wherein said set of nodes are connected by said structural links within a cluster which is composed of indivisible parts of said plurality of interactive multimedia applications so as to allow navigation between the clusters.

5. The method according to claim 4 wherein said clusters have a hierarchy tree graph (410,420,...) from root clusters (440,450) to a top cluster (410) which groups parts that are common to all the interactive multimedia applications.

6. The method according to any one of claim 4 or 5 further comprising the step of managing said plurality of interactive multimedia applications by discarding useless clusters or by loading needed data from said interactive multimedia applications source (140, 150, 160).

7. The method according to any one claim 4, 5, or 6 further comprising the step of preloading and premapping clusters that are connected to a current cluster so as to anticipate future use of said clusters.

8. The method according to any one of the previous claims wherein said step of loading said plurality of interactive multimedia applications further comprising the steps of storing parts of said plurality of interactive multimedia applications in an additional storing means like a DVD.

9. The method according to any one of the previous claims, wherein said interactive application contains at least one group of nodes associated with a predetermined video stream, said nodes containing means for triggering the execution of code in response to a signal informing of the future or current transmission of said video stream.

10. A method for managing a plurality of interactive multimedia applications transmitted from an interactive multimedia applications source (140, 150, 160) to a processing means (130) in a television receiver containing a local data storage, method **characterised in that** it said plurality of interactive multimedia applications being based on a hierarchy of a plurality of set of nodes (410,420,...) for a minimum data representation of said plurality of interactive multimedia applications and a plurality of navigation links;
said method comprising the steps of:
(a) selecting sets of nodes (410,420,...) that are the least recently used;
(b) discarding gradually from said local data storage among said selected sets of nodes, the ones that are at the bottom of said hierarchy;
(c) loading required set of nodes in said processing means (130) in response to user's commands.

11. The managing method of claim 10 wherein an indicator of usefulness is associated with said set of nodes so as to determine dynamically their usefulness.

12. The managing method of claim 10 or 11 further comprising the step of directing inputs of user's commands to the appropriate parts of said interactive multimedia applications by tracking the focused interactive elements, wherein a circulation graph is associated with said input of user's commands so as to this focus management.

13. Television receiver suitable to execute a plurality of interactive multimedia applications transmitted from an interactive multimedia applications source (140, 150, 160) to a processing means (130) in the receiver;
said receiver is **characterised in that** it comprises:
- means for loading said plurality of interactive multimedia applications (210) into said processing means (130) wherein said plurality of interactive multimedia applications are based on a plurality of nodes (211,212,...) forming a graph for data representation and a plurality of navigation links binding said nodes for dynamic representation, each nodes owning a set of attributes that define structural links and navigation links, the receiver containing basic interactive elements ;
- means for associating an basic interactive element with at least a node of the loaded interactive multimedia application depending on the value of an attribute for creating interactive graphical representation (220) composed of interactive elements (221,222,...) so that said interactive elements represent an interface between said node and a user (120); and
- means for executing user's navigation commands in response to user's navigation commands and according to the downloaded navigation links.

14. The receiver according to claim 13 further comprising:
- means for building structural links for supporting representation of said plurality of interactive multimedia applications; and
- means for building navigation links for navigating in said plurality of interactive multimedia applications.

15. The receiver according to claim 14 further comprising means for defining sets of nodes (410,420,...) connected together to form hierarchical graphs representing minimum interactive applications.

16. The receiver according to claim 15 further comprising means for managing said sets of nodes by discarding useless sets of nodes and loading needed data from said interactive multimedia applications source (140, 150, 160).

17. The receiver according to claim 16 further comprising means for storing additional parts of said plurality of interactive so as to preload and premap set of nodes that are connected to a current set of nodes so as to anticipate future use.

18. Television receiver suitable to manage a plurality of interactive multimedia applications transmitted from an interactive multimedia applications source (140, 150, 160) to a processing means (130) containing a local data storage, wherein said plurality of interactive multimedia applications being based on a hierarchy of a plurality of set of nodes (410,420,...) for a minimum data representation of said plurality of interactive multimedia applications and a plurality of navigation links;
said receiver **characterised in that** it comprises:
- means for selecting sets of nodes (410,420,...) that are the least recently used;
- means for discarding gradually from said local data storage among said selected sets of nodes, the ones that are at the bottom of said hierarchy; and
- means for loading useful set of nodes in said processing means (130) in response to user's commands.

## Patentansprüche

1. Verfahren zur Ausführung von interaktiven Multimedia-Anwendungen, die von einer Quelle (140, 150, 160) für interaktive Multimedia-Anwendungen zu Verarbeitungsmitteln (130) in einem Fernsehempfänger übertragen werden,
**gekennzeichnet durch** folgende Schritte:
(a) Laden einer interaktiven Multimedia-Anwendung (210) in die Verarbeitungsmittel (130), wobei die interaktive Multimedia-Anwendung mehrere Knoten (211, 212,...), die einen Graph für eine Datendarstellung bilden, und mehrere Navigations-Verknüpfungen enthält, die die Knoten für eine dynamische Darstellung verbinden, wobei jeder Knoten einen Satz von Attributen besitzt, die Knoten **durch** strukturelle Verknüpfungen und Navigationsverknüpfungen verbunden sind und der Empfänger grundlegende interaktive Elemente enthält,
(b) Zuordnung der Knoten der interaktiven Multimedia-Anwendung zu wenigstens einem grundlegenden interaktiven Element zur Bildung einer graphischen Darstellung (220) aus interaktiven Elementen (221, 222,...), wobei die interaktiven Elemente eine Schnittstelle zwischen den Knoten und einem Benutzer (120) darstellen,
(c) Ausführung der interaktiven Multimedia-Anwendung in den Verarbeitungsmitteln (130) aufgrund von Navigationsbefehlen des Benutzers und entsprechend den Navigationsverknüpfungen.

2. Verfahren nach Anspruch 1, wobei die Knoten für die Stützung der Darstellung der mehreren interaktiven Multimedia-Anwendungen auf Wiedergabemitteln (110) und Navigationsverknüpfungen für die Navigation in den mehreren interaktiven Multimedia-Anwendungen durch strukturelle Verknüpfungen verknüpft sind.

3. Verfahren nach Anspruch 1 oder 2 mit dem Schritt der Bestimmung von Sätzen von Knoten (410, 420,...), die miteinander verbunden sind, um Cluster zu bilden, die minimale interaktive Multimedia-Anwendungen darstellen.

4. Verfahren nach Anspruch 3, wobei der Satz von Knoten durch die strukturellen Verknüpfungen mit einem Cluster verbunden ist, der aus unteilbaren Teilen der mehreren interaktiven Multmedia-Anwendungen zusammengesetzt ist, um so eine Navigation zwischen den Clustem zu ermöglichen.

5. Verfahren nach Anspruch 4, wobei die Cluster einen hierarchischen Baum-Graph (410, 420,...) von Wurzel-Clustern (440, 450) zu einem Top-Cluster (410) aufweisen, der Teile gruppiert, die allen interaktiven Multimedia-Anwendungen gemeinsam sind.

6. Verfahren nach einem der Ansprüche 4 oder 5 mit dem Schritt der Verwaltung der mehreren interaktiven Multimedia-Anwendungen durch Verwerfung nutzloser Cluster oder durch Ladung benötigter Daten von der Quelle (140, 150, 160) für die interaktiven Multimedia-Anwendungen.

7. Verfahren nach einem der Ansprüche 4, 5 oder 6 mit dem Schritt des Vorladens und der Vorabbildung der Cluster, die mit einem laufenden Cluster verbunden sind, um so eine künftige Benutzung der Cluster vorherzusehen.

8. Verfahren nach einem der vorangehenden Ansprüche, wobei der Schritt des Ladens der mehreren interaktiven Multimedia-Anwendungen außerdem die Schritte der Speicherung von Teilen der mehreren interaktiven Multimedia-Anwendungen in zusätzlichen Speichermitteln wie einer DVD enthält.

9. Verfahren nach einem der vorangehenden Ansprüche, wobei die interaktive Anwendung wenigstens eine Gruppe von Knoten für einen vorbestimmten Videostrom enthält, die Knoten Mittel zur Auslösung der Ausführung des Codes aufgrund eines Signals enthalten, das über die künftige oder die laufende Übertragung des Videostroms informiert.

10. Verfahren zur Verwaltung von mehreren interaktiven Multimedia-Anwendungen, die von einer Quelle (140, 150, 160) für interaktive Multimedia-Anwendungen zu Verarbeitungsmitteln (130) in einem Fernsehempfänger übertragen werden, der eine örtliche Datenspeicherung enthält, **dadurch gekennzeichnet, dass** die mehreren interaktiven Multimedia-Anwendungen auf einer Hierarchie von mehreren Sätzen von Knoten (410, 420,...) für eine minimale Datendarstellung der mehrere interaktiven Multimedia-Anwendungen und den mehreren Navigationsverknüpfungen basieren,
mit folgenden Schritten:
(a) Wahl von Sätzen von Knoten (410, 420,...), die die zuletzt am wenigsten benutzten Knoten sind,
(b) graduelle Verwerfung der Knoten, die am unteren Ende der Hierarchie liegen aus der örtlichen Datenspeicherung unter den gewählten Sätzen von Knoten,
(c) Laden des benötigten Satzes von Knoten in die Verarbeitungsmittel (130) aufgrund von Benutzerbefehlen.

11. Verwaltungsverfahren nach Anspruch 10, wobei ein Indikator für die Nützlichkeit für den Satz von Knoten gebildet wird, um so dynamisch ihre Nützlichkeit zu ermitteln.

12. Verwaltungsverfahren nach Anspruch 10 oder 11 mit dem Schritt der Lenkung von Eingaben von Benutzerbefehlen zu den geeigneten Teilen der interaktiven Multimedia-Anwendungen durch Verfolgung der fokussierten interaktiven Elemente, wobei ein Zirkulations-Graph der Eingabe von Benutzerbefehlen zugeordnet wird, so wie für diese Fokusverwaltung.

13. Fernsehempfänger zur Ausführung mehrerer interaktiver Multimedia-Anwendungen, die von einer Quelle (140, 150, 160) für interaktive Multimedia-Anwendungen zu Verarbeitungsmitteln (130) in dem Empfänger übertragen werden,
**gekennzeichnet durch**:
- Mittel zum Laden der mehreren interaktiven Multimedia-Anwendungen (210) in die Verarbeitungsmittel (130), wobei die mehreren interaktiven Multimedia-Anwendungen auf mehreren Knoten (211, 212,...) basieren, die ein Graph für die Datendarstellung und mehrere Navigationsverknüpfungen bilden, die die Knoten für dynamische Darstellung verbinden, wobei jeder Knoten einen Satz von Attributen besitzt, der strukturelle Verknüpfungen und Navigationsverknüpfungen bestimmt, und wobei der Empfänger grundlegende interaktive Elemente enthält,
- Mittel zur Zuordnung eines grundlegenden interaktiven Elements zu wenigstens einem Knoten der geladenen interaktiven Multimedia-Anwendung, abhängig von dem Wert eines Attributs zur Bildung der interaktiven graphischen Darstellung (220) aus interaktiven Elementen (221, 222,...), so dass die interaktiven Elemente eine Schnittstelle zwischen dem Knoten und einem Benutzer (120) darstellen, und
- Mittel zur Durchführung von Navigationsbefehlen des Benutzers aufgrund von Navigationsbefehlen des Benutzers und gemäß den heruntergeladenen Navigationsverknüpfungen.

14. Empfänger nach Anspruch 13 mit:
- Mitteln zum Aufbau struktureller Verknüpfungen für die Unterstützung der Darstellung der mehreren interaktiven Multimedia-Anwendungen und
- Mitteln zum Aufbau von Navigationsverknüpfungen für die Navigation in den mehreren interaktiven Multimedia-Anwendungen.

15. Empfänger nach Anspruch 14 mit Mitteln zur Bestimmung von Sätzen von Knoten (410, 420,...), die miteinander verbunden sind, zur Bildung von hierarchischen Graphen, die minimale interaktive Anwendungen darstellen.

16. Empfänger nach Anspruch 15 mit Mitteln zur Verwaltung der Sätze von Knoten durch Verwerfung nutzloser Sätze von Knoten und Laden von benötigten Daten von der Quelle (140, 150, 160) für die interaktiven Multimedia-Anwendungen.

17. Empfänger nach Anspruch 16 mit Mitteln zur Speicherung zusätzlicher Teile der mehreren interaktiven Anwendungen, um so den Satz von Knoten vorzuladen und vorabzubilden, der mit einem laufenden Satz von Knoten verbunden ist, um so eine künftige Benutzung vorherzusehen.

18. Fernsehempfänger zur Verwaltung von mehreren interaktiven Multimedia-Anwendungen, die von einer Quelle (140, 150, 160) für interaktive Multimedia-Anwendungen zu Verarbeitungsmitteln (130) übertragen werden, die eine örtliche Datenspeicherung enthalten, wobei die mehreren interaktiven Multimedia-Anwendungen auf einer Hierarchie von mehreren Sätzen von Knoten (410, 420,...) für eine minimale Datendarstellung der mehreren interaktiven Multimedia-Anwendungen und der mehreren Navigationsverknüpfungen beruhen,
**gekennzeichnet durch**:
- Mittel zur Wahl von Sätzen von Knoten (410, 420,...), die die zuletzt am wenigsten benutzten Knoten sind,
- Mittel zum graduellen Verwerfen derjenigen Knoten, die am unteren Ende der Hierarchie liegen, aus der örtlichen Datenspeicherung unter den gewählten Sätzen von Knoten und
- Mittel zum Laden eines nützlichen Satzes von Knoten in die Verarbeitungsmittel (130) aufgrund von Benutzerbefehlen.

## Revendications

1. Procédé pour exécuter des applications multimédia interactives transmises d'une source d'applications interactives (140, 150, 160) à un moyen de traitement (130) dans un récepteur de télévision ;
ledit procédé étant **caractérisé en ce qu'**il comprend les étapes consistant à :
(a) charger une application multimédia interactive (210) dans ledit moyen de traitement (130), ladite application multimédia interactive comprenant une pluralité de noeuds (211, 212, ...) formant un graphe en vue d'une représentation de données, et une pluralité de liens de navigation connectant lesdits noeuds en vue d'une représentation dynamique, chaque noeud possédant un ensemble d'attributs, les noeuds étant reliés par des liens structurels et des liens de navigation, le récepteur contenant des éléments interactifs élémentaires ;
(b) associer des noeuds de l'application multimédia interactive à au moins un élément interactif élémentaire pour créer une représentation graphique (220) composée d'éléments interactifs (221, 222), lesdits éléments interactifs représentant une interface entre lesdits noeuds et un utilisateur (120) ;
(c) exécuter ladite application multimédia interactive dans ledit moyen de traitement (130) en réponse à des commandes de navigation de l'utilisateur et en fonction des liens de navigation.

2. Procédé selon la revendication 1, dans lequel lesdits noeuds sont reliés par des liens structurels pour supporter la représentation de ladite pluralité d'applications multimédia interactives sur un moyen d'affichage (110) et par des liens de navigation pour naviguer dans ladite pluralité d'applications multimédia interactives.

3. Procédé selon la revendication 1 ou 2, comprenant en outre l'étape consistant à définir des ensembles de noeuds (410, 420, ...) reliés pour former des groupes représentant des applications multimédia interactives minimales.

4. Procédé selon la revendication 3, dans lequel ledit ensemble de noeuds est relié par lesdits liens structurels au sein d'un groupe composé de parties indivisibles de ladite pluralité d'applications multimédia interactives de manière à permettre la navigation entre les groupes.

5. Procédé selon la revendication 4, dans lequel lesdits groupes possèdent un graphe arborescent hiérarchique (410, 420, ...) depuis des groupes de racine (440, 450) jusqu'à un groupe de sommet (410) regroupant des parties communes à toutes les applications multimédia interactives.

6. Procédé selon l'une quelconque des revendications 4 à 5, comprenant en outre l'étape consistant à gérer ladite pluralité d'applications multimédia interactives par élimination de groupes inutiles ou par chargement de données nécessaires depuis ladite source d'applications multimédia interactives (140, 150, 160).

7. Procédé selon l'une quelconque des revendications 4, 5 ou 6, comprenant en outre l'étape consistant à effectuer un chargement et une mise en correspondance anticipée de groupes reliés à un groupe courant de manière à devancer une utilisation future desdits groupes.

8. Procédé selon l'une quelconque des revendications précédentes, dans lequel ladite étape consistant à charger ladite pluralité d'applications multimédia interactives comprend en outre l'étape consistant à ranger des parties de ladite pluralité d'applications multimédia interactives dans un moyen de mémorisation supplémentaire tel qu'un DVD.

9. Procédé selon l'une quelconque des revendications précédentes, dans lequel ladite application interactive contient au moins un ensemble de noeuds associés à un flux vidéo prédéterminé, lesdits noeuds contenant un moyen pour déclencher l'exécution d'un code en réponse à un signal informant de la transmission future ou courante dudit flux vidéo.

10. Procédé de gestion d'une pluralité d'applications multimédia interactives transmises d'une source d'applications multimédia interactives (140, 150, 160) à un moyen de traitement (130) dans un récepteur de télévision contenant une mémoire de données locale, ledit procédé étant **caractérisé en ce que** ladite pluralité d'applications multimédia interactives est basée sur une hiérarchie d'une pluralité d'ensembles de noeuds (410, 420, ...) pour une représentation de données minimale de ladite pluralité d'applications multimédia interactives et d'une pluralité de liens de navigation ;
ledit procédé comprenant les étapes consistant à :
(a) sélectionner des ensembles de noeuds (410, 420, ...) les moins récemment utilisés ;
(b) éliminer progressivement de ladite mémoire de données locale les noeuds situés en bas de la hiérarchie parmi lesdits ensembles de noeuds sélectionnés ;
(c) charger des ensembles de noeuds requis dans ledit moyen de traitement (130) en réponse à des commandes de l'utilisateur.

11. Procédé de gestion selon la revendication 10, dans lequel un indicateur d'utilité est associé audit ensemble de noeuds de manière à déterminer dynamiquement leur utilité.

12. Procédé de gestion selon la revendication 10 ou 11, comprenant en outre l'étape consistant à acheminer des données de commandes de l'utilisateur vers des parties appropriées desdites applications multimédia interactives en identifiant les éléments interactifs mis en valeur, un graphe de circulation étant associé auxdites données de commandes de l'utilisation de manière à cette gestion de la mise en valeur.

13. Récepteur de télévision apte à exécuter une pluralité d'applications multimédia interactives transmises d'une source d'applications multimédia interactives (140, 150, 160) à un moyen de traitement (130) dans le récepteur ;
ledit récepteur étant **caractérisé en ce qu'**il comprend :
- un moyen pour charger ladite pluralité d'applications multimédia interactives (210) dans ledit moyen de traitement (130), ladite pluralité d'applications multimédia interactives étant basées sur une pluralité de noeuds (211, 212, ...) formant un graphe en vue d'une représentation de données et une pluralité de liens de navigation connectant lesdits noeuds en vue d'une représentation dynamique, chaque noeud possédant un ensemble d'attributs définissant des liens structurels et des liens de navigation, le récepteur contenant des éléments interactifs élémentaires ;
- un moyen pour associer un élément interactif élémentaire à au moins un noeud de l'application multimédia interactive chargée en fonction de la valeur d'un attribut en vue de créer une représentation graphique interactive (220) composée d'éléments interactifs (221, 222, ...) de sorte que lesdits éléments interactifs représentent une interface entre ledit noeud et un utilisateur (120) ; et
- un moyen pour exécuter des commandes de navigation de l'utilisateur en réponse à des commandes de navigation de l'utilisateur et suivant les liens de navigation téléchargés.

14. Récepteur selon la revendication 13, comprenant en outre:
- un moyen pour construire des liens structurels pour supporter la représentation de ladite pluralité d'applications multimédia interactives ; et
- un moyen pour construire des liens de navigation pour naviguer dans ladite pluralité d'applications multimédia interactives.

15. Récepteur selon la revendication 14, comprenant en outre un moyen pour définir des ensembles de noeuds (410, 420, ...) reliés pour former des graphes hiérarchiques représentant des applications interactives minimales.

16. Récepteur selon la revendication 15, comprenant en outre un moyen pour gérer lesdits ensembles de noeuds par élimination d'ensembles inutiles de noeuds et par chargement de données nécessaires depuis la source d'applications multimédia interactives (140, 150, 160).

17. Récepteur selon la revendication 16, comprenant en outre un moyen pour mémoriser des parties supplémentaires de ladite pluralité d'applications interactives de manière à effectuer un chargement et une mise en correspondance anticipée d'ensemble de noeuds reliés à un ensemble de noeuds courant de manière à devancer une utilisation future.

18. Récepteur de télévision apte à gérer une pluralité d'applications multimédia interactives transmises d'une source d'applications multimédia interactives (140, 150, 160) à un moyen de traitement (130) contenant une mémoire de données locale, dans lequel ladite pluralité d'applications multimédia interactives est basée sur une hiérarchie d'une pluralité d'ensembles de noeuds (410, 420, ...) pour une représentation de données minimale de ladite pluralité d'applications multimédia interactives et d'une pluralité de liens de navigation ;
ledit récepteur étant **caractérisé en ce qu'**il comprend :
- un moyen pour sélectionner des ensembles de noeuds (410, 420, ...) les moins récemment utilisés ;
- un moyen pour éliminer progressivement de ladite mémoire de données locale les noeuds situés en bas de la hiérarchie parmi lesdits ensembles de noeuds sélectionnés ;
- un moyen pour charger des ensembles de noeuds utiles dans ledit moyen de traitement (130) en réponse à des commandes de l'utilisateur.
